(19) **Europäisches Patentamt / European Patent Office / Office européen des brevets**

(11) **EP 4 113 926 A1**

(12) **EUROPEAN PATENT APPLICATION**
published in accordance with Art. 153(4) EPC

(43) Date of publication:
**04.01.2023 Bulletin 2023/01**

(21) Application number: **20926955.4**

(22) Date of filing: **25.03.2020**

(51) International Patent Classification (IPC):
**H04L 27/38** (2006.01)   **H04L 27/26** (2006.01)
**H04L 5/00** (2006.01)   **H04L 1/00** (2006.01)

(52) Cooperative Patent Classification (CPC):
**H04L 1/00; H04L 5/00; H04L 27/26; H04L 27/38**

(86) International application number:
**PCT/CN2020/081230**

(87) International publication number:
**WO 2021/189333 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129, (CN)**

(72) Inventors:
• **REN, Haibao**
  **Shenzhen, Guangdong 518129 (CN)**
• **XU, Bo**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57)   Embodiments of the present invention disclose a communication method and a device. The method includes: processing first information, where a processing process includes $\pi/2$ binary phase shift keying BPSK modulation, layer mapping, discrete Fourier transform DFT precoding, precoding, and orthogonal frequency division multiplexing OFDM waveform generation; and sending the processed first information to a network device. According to embodiments of the present invention, a PAPR can be reduced.

FIG. 3

EP 4 113 926 A1

**Description**

**TECHNICAL FIELD**

Embodiments of the present invention relate to the field of communication technologies, and in particular, to a communication method and apparatus.

**BACKGROUND**

A peak to average power ratio (peak to average power ratio, PAPR) is a ratio of a peak power to an average power of a signal, and is used to evaluate amplitude fluctuation of the signal. A higher PAPR indicates a larger change in signal amplitude. When the PAPR is high, a signal peak may fall into a non-linear area of a power amplifier, resulting in signal distortion. In addition, the high PAPR may require a terminal device to reduce a transmit power. Consequently, network (or cell) coverage is reduced, resulting in a coverage loss. Therefore, how to reduce the PAPR has become a technical problem urgently to be resolved.

**SUMMARY**

Embodiments of the present invention disclose a communication method and apparatus, to reduce a PAPR.

According to a first aspect, a communication method is disclosed. The method includes: processing first information, and sending the processed first information to a network device. The processing process may include $\pi/2$ binary phase shift keying (binary phase shift keying, BPSK) modulation, layer mapping, discrete Fourier transform (discrete Fourier transform, DFT) precoding, precoding, and orthogonal frequency division multiplexing (orthogonal frequency division multiplexing, OFDM) waveform generation.

In this embodiment of the present invention, before sending the first information, a terminal device modulates the first information by using $\pi/2$ BPSK. Because a phase difference between any two adjacent modulated symbols in a $\pi/2$ BPSK modulated symbol sequence is 90°, it can be ensured that the modulated first information has a low PAPR, so that the PAPR can be reduced. In addition, before sending the first information, the terminal device performs DFT precoding and OFDM waveform generation on the first information. It can be learned that the processed first information is the first information in a DFT-spread (spread, s)-OFDM waveform, and the DFT-s-OFDM waveform has a low PAPR. Therefore, it can be ensured that the waveform used for sending has a low PAPR. Further, the low PAPR can ensure that the terminal device backs off a low power when sending a signal, so that uplink coverage can be improved.

In a possible implementation, when the first information is processed, the first information may be modulated based on a quantity of transport layers and $\pi/2$ BPSK, layer mapping may be performed on the modulated first information, DFT precoding may be performed on the first information obtained through layer mapping, the first information obtained through DFT precoding may be precoded, and OFDM waveform generation may be performed on the precoded first information, to obtain the first information in a DFT-s-OFDM waveform. The processed first information is sent to the network device. In other words, the first information in a DFT-s-OFDM waveform is sent to the network device. The quantity of transport layers is greater than or equal to 1.

In this embodiment of the present invention, the phase difference between any two adjacent modulated symbols in the $\pi/2$ BPSK modulated symbol sequence is 90°, but the phase difference between adjacent symbols at a same transport layer after layer mapping may be 0° or 180°. Therefore, the first information is modulated based on the quantity of transport layers and $\pi/2$ BPSK, which considers impact of the layer mapping on the phase difference between the adjacent symbols, so that it can be ensured that the phase difference between the adjacent symbols at each of different transport layers is 90°, the impact of the layer mapping on the phase difference between the adjacent symbols can be avoided, and therefore the PAPR can be reduced. In addition, the quantity of transport layers may be greater than or equal to 1, so that single-stream or multi-stream transmission can be implemented when $\pi/2$ BPSK is used for modulation.

In a possible implementation, modulated symbols corresponding to adjacent bits in the first information are layer mapped to different transport layers.

In embodiments of the present invention, although the phase difference between the adjacent symbols before layer mapping may be 0° or 180°, if a quantity of symbols between two symbols is equal to the quantity of transport layers minus 1, a phase difference between the two symbols is 90°. In this way, the modulated symbols corresponding to the adjacent bits are layer mapped to different transport layers, so that it can be ensured that the phase difference between the adjacent symbols at each of different transport layers is 90°, the impact of the layer mapping on the phase difference between the adjacent symbols can be avoided, and therefore the PAPR can be reduced.

In a possible implementation, the processing process may further include interleaving. When the first information is processed, the first information is modulated by using $\pi/2$ BPSK, the modulated first information is interleaved, layer mapping is performed on the interleaved first information, DFT precoding is performed on the first information obtained through layer mapping, the first information obtained through DFT precoding is precoded, and OFDM waveform generation is performed on the precoded first information, to obtain the first information in a DFT-s-OFDM waveform. The processed first information is sent to the network device. In other words, the first information in a DFT-s-OFDM waveform is sent to the network device.

In this embodiment of the present invention, the phase difference between any two adjacent modulated symbols in the $\pi/2$ BPSK modulated symbol sequence is 90°, but the phase difference between adjacent symbols at a same transport layer after layer mapping may be 0° or 180°. Therefore, the first information may be sequentially modulated and interleaved, and layer mapping is then performed on the interleaved first information, so that it can be ensured that the phase difference between the adjacent symbols at each of different transport layers is 90°, impact of the layer mapping on the phase difference between the adjacent symbols can be avoided, and therefore the PAPR can be reduced.

In a possible implementation, when the modulated first information is interleaved, the modulated first information may be interleaved based on a quantity of transport layers and a quantity of bits included in the first information.

In this embodiment of the present invention, the modulated first information is interleaved based on the quantity of transport layers and the quantity of bits included in the first information, so that it can be ensured that the phase difference between the adjacent symbols at each of different transport layers is 90°, and therefore the PAPR can be reduced.

In a possible implementation, when the first information is processed, layer mapping may be performed on the first information, the first information obtained through layer mapping may be modulated by using $\pi/2$ BPSK, DFT precoding may be performed on the modulated first information, the first information obtained through DFT precoding may be precoded, and OFDM waveform generation may be performed on the precoded first information, to obtain the first information of a DFT-s-OFDM waveform. The processed first information is sent to the network device. In other words, the first information in a DFT-s-OFDM waveform is sent to the network device.

In this embodiment of the present invention, the phase difference between any two adjacent modulated symbols in the $\pi/2$ BPSK modulated symbol sequence is 90°, but the phase difference between adjacent symbols at a same transport layer may be 0° or 180° after layer mapping is performed on modulated symbols. Therefore, layer mapping may be performed on the first information, and the first information obtained through layer mapping is then modulated based on $\pi/2$ BPSK, so that impact of the layer mapping on the phase difference between the modulated adjacent symbols can be avoided, it can be ensured that the phase difference between the adjacent symbols at each of different transport layers is 90°, and therefore the PAPR can be reduced.

In a possible implementation, the processing process may further include resource element (resource element, RE) mapping. When the first information is processed, RE mapping may be further performed on the precoded first information, and OFDM waveform generation is then performed on the first information obtained through RE mapping, to obtain the first information of a DFT-s-OFDM waveform.

In a possible implementation, when the first information obtained through DFT precoding is precoded, the first information obtained through DFT precoding may be precoded based on a precoding matrix. A quantity of rows of the precoding matrix is equal to a quantity of transmit antenna ports, a quantity of columns of the precoding matrix is equal to a quantity of transport layers, and codewords included in the precoding matrix are non-coherent codewords or partially-coherent codewords.

In this embodiment of the present invention, when provided with a plurality of transmit antenna ports, the terminal device needs to precode the information. To ensure that the PAPRs before and after precoding remain unchanged, the to-be-sent information may be precoded by using a non-coherent precoding matrix or a partially-coherent precoding matrix. The codewords included in the precoding matrix are the non-coherent codewords or the partially-coherent codewords, so that it can be ensured that the precoding matrix is the non-coherent precoding matrix or the partially-coherent precoding matrix, and therefore it can be ensured that the PAPR is not affected during multi-stream transmission.

In a possible implementation, first indication information indicating that a modulation scheme is $\pi/2$ BPSK and transmission of more than one layer is allowed may be received from the network device, and it is determined, based on the first indication information, that the modulation scheme is $\pi/2$ BPSK.

In this embodiment of the present invention, the terminal device may determine, based on the first indication information, that the modulation scheme is $\pi/2$ BPSK. In addition, the terminal device may further determine, based on the first indication information, that when the $\pi/2$ BPSK modulation scheme is used, the transmission may be the multistream transmission.

In a possible implementation, second indication information indicating a precoding matrix may be received from the network device, and the first information obtained through DFT precoding is precoded based on the precoding matrix indicated by the second indication information.

According to a second aspect, a communication method is disclosed. The method includes: receiving second information from a terminal device; and processing the second information, to obtain first information, where the first information is information sent by the terminal device, and a processing process may include de-$\pi/2$ BPSK modulation, de-layer mapping, de-DFT precoding, and de-OFDM waveform.

In this embodiment of the present invention, before sending the first information to the network device, the terminal device performs processing such as $\pi/2$ BPSK modulation, layer mapping, DFT precoding, and OFDM waveform generation on the first information. Therefore, after receiving the second information from the terminal device, the network device needs to perform processing such as de-$\pi/2$ BPSK modulation, de-layer mapping, de-DFT precoding, and de-OFDM waveform on the second information, to obtain the first information sent by the terminal device. In addition, before sending the first information, the terminal device modulates the first information by using $\pi/2$ BPSK. Because a phase difference between any two adjacent modulated symbols in a $\pi/2$ BPSK modulated symbol sequence is 90°, it can be ensured that the modulated first information has a low PAPR, so that the PAPR can be reduced. In addition, before sending the first information, the terminal device performs DFT precoding and OFDM waveform generation on the first information. It can be learned that the processed first information is the first information in a DFT-spread (spread, s)-OFDM waveform, and the DFT-s-OFDM waveform has a low PAPR. Therefore, it can be ensured that the waveform used for sending has a low PAPR. Further, the low PAPR can ensure that the terminal device backs off a low power when sending a signal, so that uplink coverage can be improved.

In a possible implementation, when the second information is processed, to obtain the first information, de-OFDM waveform may be performed on the second information, de-DFT precoding may be performed on the second information obtained through de-OFDM waveform, de-layer mapping may be performed on the second information obtained through de-DFT precoding, and the second information obtained through de-layer mapping may be demodulated based on a quantity of transport layers and $\pi/2$ BPSK, to obtain the first information, where the quantity of transport layers is greater than or equal to 1.

In this embodiment of the present invention, before sending the first information to the network device, the terminal device performs $\pi/2$ BPSK modulation, layer mapping, DFT precoding, and OFDM waveform generation on the first information. Therefore, after receiving the second information from the terminal device, the network device needs to perform de-OFDM waveform, de-DFT precoding, de-layer mapping, and de-$\pi/2$ BPSK modulation on the second information, to obtain the first information sent by the terminal device. The phase difference between any two adjacent modulated symbols in the $\pi/2$ BPSK modulated symbol sequence is 90°, but the phase difference between adjacent symbols at a same transport layer after layer mapping may be 0° or 180°. Therefore, the first information is modulated based on the quantity of transport layers and $\pi/2$ BPSK, which considers impact of the layer mapping on the phase difference between the adjacent symbols, so that it can be ensured that the phase difference between the adjacent symbols at each of different transport layers is 90°, the impact of the layer mapping on the phase difference between the adjacent symbols can be avoided, and therefore the PAPR can be reduced. In addition, the quantity of transport layers may be greater than or equal to 1, so that single-stream or multi-stream transmission can be implemented when $\pi/2$ BPSK is used for modulation.

In a possible implementation, adjacent bits in the first information are obtained by performing de-layer mapping and demodulation on symbols that are from different transport layers and that are in the second information obtained through de-DFT precoding.

In this embodiment of the present invention, the adjacent bits in the first information are obtained by performing de-layer mapping and demodulation on the symbols that are from different transport layers and that are in the second information obtained through de-DFT precoding, indicating that modulated symbols corresponding to the adjacent bits in the first information are layer mapped to different transport layers. Although the phase difference between the adjacent symbols before layer mapping may be 0° or 180°, if a quantity of symbols between two symbols is equal to the quantity of transport layers minus 1, a phase difference between the two symbols is 90°. In this way, the modulated symbols corresponding to the adjacent bits are layer mapped to different transport layers, so that it can be ensured that the phase difference between the adjacent symbols at each of different transport layers is 90°, impact of the layer mapping on the phase difference between the adjacent symbols can be avoided, and therefore the PAPR can be reduced.

In a possible implementation, the processing process may further include de-interleaving. When the second information is processed, to obtain the first information, de-OFDM waveform may be performed on the second information, de-DFT precoding may be performed on the second information obtained through de-OFDM waveform, de-layer mapping may be performed on the second information obtained through de-DFT precoding, the second information obtained through de-layer mapping may be de-interleaved, and the de-interleaved second information may be demodulated based on $\pi/2$ BPSK, to obtain the first information.

In this embodiment of the present invention, before sending the first information to the network device, the terminal device performs $\pi/2$ BPSK modulation, interleaving, layer mapping, DFT precoding, and OFDM waveform generation on the first information. Therefore, after receiving the second information from the terminal device, the network device needs to perform de-OFDM waveform, de-DFT precoding, de-layer mapping, de-interleaving, and de-$\pi/2$ BPSK modulation on the second information, to obtain the first information sent by the terminal device. The phase difference between any two adjacent modulated symbols in the $\pi/2$ BPSK modulated symbol sequence is 90°, but the phase difference between adjacent symbols at a same transport layer after layer mapping may be 0° or 180°. Therefore, the first information may be sequentially modulated and interleaved, and layer mapping is then performed on the interleaved first information, so that it can be ensured that the phase difference between the adjacent symbols at each of different transport layers is 90°, impact of the layer mapping on the phase difference between the adjacent symbols can be avoided, and therefore the PAPR can be reduced.

In a possible implementation, the second information obtained through de-layer mapping is de-interleaved, and the second information obtained through de-layer mapping may be de-interleaved based on a quantity of transport layers and a quantity of bits included in the first information.

In this embodiment of the present invention, before sending the first information to the network device, the terminal device interleaves the first information based on the quantity of transport layers and the quantity of bits included in the first information. Therefore, after receiving the second information from the terminal device, the network device also needs to de-interleave the second information based on the quantity of transport layers and the quantity of bits included in the first information. The modulated first information is interleaved based on the quantity of transport layers and the quantity of bits included in the first information, so that it can be ensured that the phase difference between the adjacent symbols at each of different transport layers is 90°, and therefore the PAPR can be reduced.

In a possible implementation, when the second information is processed, to obtain the first information, de-OFDM waveform may be performed on the second information, de-DFT precoding may be performed on the second information obtained through de-OFDM waveform, the second information obtained through de-DFT precoding may be demodulated based on $\pi/2$ BPSK, and de-layer mapping may be performed on the demodulated second information, to obtain the first information.

In this embodiment of the present invention, before sending the first information to the network device, the terminal device performs layer mapping, $\pi/2$ BPSK modulation, DFT precoding, and OFDM waveform generation on the first information. Therefore, after receiving the second information from the terminal device, the network device needs to perform de-OFDM waveform, de-DFT precoding, de-$\pi/2$ BPSK modulation, and de-layer mapping on the second information, to obtain the first information sent by the terminal device. The phase difference between any two adjacent modulated symbols in the $\pi/2$ BPSK modulated symbol sequence is 90°, but the phase difference between adjacent symbols at a same transport layer may be 0° or 180° after layer mapping is performed on modulated symbols. Therefore, layer mapping may be performed on the first information, and the first information obtained through layer mapping is then modulated based on $\pi/2$ BPSK, so that impact of the layer mapping on the phase difference between the modulated adjacent symbols can be avoided, it can be ensured that the phase difference between the adjacent symbols at each of different transport layers is 90°, and therefore the PAPR can be reduced.

In a possible implementation, the processing process may further include de-RE mapping, and the processing the second information, to obtain first information further includes: performing de-RE mapping on the second information obtained through de-OFDM waveform. De-DFT precoding is performed on the second information obtained through de-OFDM waveform, or de-DFT precoding may be performed on the second information obtained through de-RE mapping.

In a possible implementation, $\pi/2$ BPSK may be determined as a modulation scheme of the terminal device, and first indication information indicating that the modulation scheme is $\pi/2$ BPSK and transmission of more than one layer is allowed is sent to the terminal device.

In this embodiment of the present invention, the terminal device may determine, based on the first indication information, that the modulation scheme is $\pi/2$ BPSK. In addition, the terminal device may further determine, based on the first indication information, that when the $\pi/2$ BPSK modulation scheme is used, the transmission may be multi-stream transmission.

According to a third aspect, a communication apparatus is disclosed. The apparatus includes:

a processing unit, configured to process first information, where a processing process includes $\pi/2$ BPSK modulation, layer mapping, DFT precoding, precoding, and OFDM waveform generation; and
a sending unit, configured to send the processed first information to a network device.

In a possible implementation, the processing unit is specifically configured to:

modulate the first information based on a quantity of transport layers and $\pi/2$ BPSK, where the quantity of transport layers is greater than or equal to 1;
perform layer mapping on the modulated first information;
perform DFT precoding on the first information obtained through layer mapping;
precode the first information obtained through DFT precoding; and
perform OFDM waveform generation on the precoded first information, to obtain the first information in a DFT-s-OFDM waveform; and
the sending unit is specifically configured to send the first information in a DFT-s-OFDM waveform to the network device.

In a possible implementation, modulated symbols corresponding to adjacent bits in the first information are layer mapped to different transport layers.

In a possible implementation, the processing process further includes interleaving, and the processing unit is specifically configured to:

modulate the first information by using π/2 BPSK;
interleave the modulated first information;
perform layer mapping on the interleaved first information;
perform DFT precoding on the first information obtained through layer mapping;
precode the first information obtained through DFT precoding; and
perform OFDM waveform generation on the precoded first information, to obtain the first information in a DFT-s-OFDM waveform; and
the sending unit is specifically configured to send the first information in a DFT-s-OFDM waveform to the network device.

In a possible implementation, that the processing unit interleaves the modulated first information includes: interleaving the modulated first information based on a quantity of transport layers and a quantity of bits included in the first information.

In a possible implementation, the processing unit is specifically configured to:

perform layer mapping on the first information;
modulate, by using π/2 BPSK, the first information obtained through layer mapping;
perform DFT precoding on the modulated first information;
precode the first information obtained through DFT precoding; and
perform OFDM waveform generation on the precoded first information, to obtain the first information in a DFT-s-OFDM waveform; and
the sending unit is specifically configured to send the first information in a DFT-s-OFDM waveform to the network device.

In a possible implementation, the processing process further includes RE mapping, and the processing unit is specifically further configured to perform RE mapping on the precoded first information.

That the processing unit performs OFDM waveform generation on the precoded first information, to obtain the first information in a DFT-s-OFDM waveform includes:
performing OFDM waveform generation on the first information obtained through RE mapping, to obtain the first information in a DFT-s-OFDM waveform.

In a possible implementation, that the processing unit precodes the first information obtained through DFT precoding includes:
precoding, based on a precoding matrix, the first information obtained through DFT precoding, where a quantity of rows of the precoding matrix is equal to a quantity of transmit antenna ports, a quantity of columns of the precoding matrix is equal to a quantity of transport layers, and codewords included in the precoding matrix are non-coherent codewords or partially-coherent codewords.

In a possible implementation, the apparatus further includes:

a receiving unit, configured to receive, from the network device, first indication information indicating that a modulation scheme is π/2 BPSK and transmission of more than one layer is allowed; and
a determining unit, configured to determine, based on the first indication information, that the modulation scheme is π/2 BPSK.

In a possible implementation, the receiving unit is further configured to receive, from the network device, second indication information indicating the precoding matrix.

That the processing unit precodes, based on a precoding matrix, the first information obtained through DFT precoding includes:
precoding, based on the precoding matrix indicated by the second indication information, the first information obtained through DFT precoding.

According to a fourth aspect, a communication apparatus is disclosed. The apparatus includes:

a receiving unit, configured to receive second information from a terminal device; and
a processing unit, configured to process the second information, to obtain first information, where the first information is information sent by the terminal device, and a processing process includes de-$\pi$/2 BPSK modulation, de-layer mapping, de-DFT precoding, and de-OFDM waveform.

In a possible implementation, the processing unit is specifically configured to:

perform de-OFDM waveform on the second information;
perform de-DFT precoding on the second information obtained through de-OFDM waveform;
perform de-layer mapping on the second information obtained through de-DFT precoding; and
demodulate, based on a quantity of transport layers and $\pi$/2 BPSK, the second information obtained through de-layer mapping, to obtain the first information, where the quantity of transport layers is greater than or equal to 1.

In a possible implementation, adjacent bits in the first information are obtained by performing de-layer mapping and demodulation on symbols that are from different transport layers and that are in the second information obtained through de-DFT precoding.

In a possible implementation, the processing process further includes de-interleaving, and the processing unit is specifically configured to:

perform de-OFDM waveform on the second information;
perform de-DFT precoding on the second information obtained through de-OFDM waveform;
perform de-layer mapping on the second information obtained through de-DFT precoding;
de-interleave the second information obtained through de-layer mapping; and
demodulate the de-interleaved second information based on $\pi$/2 BPSK, to obtain the first information.

In a possible implementation, that the processing unit de-interleaves the second information obtained through de-layer mapping includes:
de-interleaving, based on a quantity of transport layers and a quantity of bits included in the first information, the second information obtained through de-layer mapping.

In a possible implementation, the processing unit is specifically configured to:

perform de-OFDM waveform on the second information;
perform de-DFT precoding on the second information obtained through de-OFDM waveform;
demodulate, based on $\pi$/2 BPSK, the second information obtained through de-DFT precoding; and
perform de-layer mapping on the demodulated second information, to obtain the first information.

In a possible implementation, the processing process further includes de-RE mapping, and the processing unit is specifically further configured to perform de-RE mapping on the second information obtained through de-OFDM waveform.

That the processing unit performs de-DFT precoding on the second information obtained through de-OFDM waveform includes:
performing de-DFT precoding on the second information obtained through de-RE mapping.

In a possible implementation, the apparatus further includes:

a determining unit, configured to determine $\pi$/2 BPSK as a modulation scheme of the terminal device; and
a sending unit, configured to send, to the terminal device, first indication information indicating that the modulation scheme is $\pi$/2 BPSK and transmission of more than one layer is allowed.

According to a fifth aspect, a communication apparatus is disclosed. The communication apparatus may be a terminal device or a module (for example, a chip) in the terminal device. The communication apparatus may include a processor, a memory, an input interface, and an output interface. The input interface is configured to receive information from a communication apparatus other than the communication apparatus, and the output interface is configured to output information to a communication apparatus other than the communication apparatus. When the processor executes a computer program stored in the memory, the processor is enabled to perform the communication method disclosed in any one of the first aspect or the implementations of the first aspect.

According to a sixth aspect, a communication apparatus is disclosed. The communication apparatus may be a network device or a module (for example, a chip) in the network device. The communication apparatus may include a processor, a memory, an input interface, and an output interface. The input interface is configured to receive information from a communication apparatus other than the communication apparatus, and the output interface is configured to output information to a communication apparatus other than the communication apparatus. When the processor executes a computer program stored in the memory, the processor is enabled to perform the communication method disclosed in any one of the second aspect or the implementations of the second aspect.

According to a seventh aspect, a computer-readable storage medium is disclosed. The computer-readable storage medium stores a computer program or computer instructions. When the computer program or the computer instructions are run, the communication method disclosed in any one of the first aspect or the implementations of the first aspect, or the communication method disclosed in any one of the second aspect or the implementations of the second aspect is implemented.

According to an eighth aspect, a computer program product is provided. The computer program product includes computer program code. When the computer program code is run, the communication method according to the first aspect or the second aspect is performed.

According to a ninth aspect, a communication system is disclosed. The communication system includes the communication apparatus according to the fifth aspect and the communication apparatus according to the sixth aspect.

**BRIEF DESCRIPTION OF DRAWINGS**

FIG. 1 is a schematic diagram of a network architecture according to an embodiment of the present invention;

FIG. 2 is a required processing procedure before information sending according to an embodiment of the present invention;

FIG. 3 is a schematic flowchart of a communication method according to an embodiment of the present invention;

FIG. 4 is a schematic flowchart of processing first information by a terminal device according to an embodiment of the present invention;

FIG. 5 is a layer mapping manner in which a quantity of transport layers is 2 according to an embodiment of the present invention;

FIG. 6 is another schematic flowchart of processing first information by a terminal device according to an embodiment of the present invention;

FIG. 7 is still another schematic flowchart of processing first information by a terminal device according to an embodiment of the present invention;

FIG. 8 is a schematic flowchart of processing second information by a network device according to an embodiment of the present invention;

FIG. 9 is another schematic flowchart of processing second information by a network device according to an embodiment of the present invention;

FIG. 10 is still another schematic flowchart of processing second information by a network device according to an embodiment of the present invention;

FIG. 11 is a schematic diagram of a structure of a communication apparatus according to an embodiment of the present invention;

FIG. 12 is a schematic diagram of a structure of another communication apparatus according to an embodiment of the present invention;

FIG. 13 is a schematic diagram of a structure of still another communication apparatus according to an embodiment of the present invention; and

FIG. 14 is a schematic diagram of a structure of yet another communication apparatus according to an embodiment of the present invention.

**DESCRIPTION OF EMBODIMENTS**

Embodiments of the present invention disclose a communication method and apparatus, to reduce a PAPR. Details are separately described below.

To better understand the communication method and apparatus according to embodiments of the present invention, the following first describes an application scenario of embodiments of the present invention. The PAPR is a ratio of a peak power to an average power of a signal, and is a common indicator used to evaluate amplitude fluctuation of the signal. A higher PAPR indicates a larger change in signal amplitude. When the PAPR is high, a signal peak may fall into a non-linear area of a power amplifier, resulting in signal distortion. In addition, the high PAPR may require a terminal device to reduce a transmit power. Consequently, network (or cell) coverage is reduced, resulting in a coverage loss. Therefore, for a network (or cell) coverage edge, a PAPR of a signal sent by the terminal device needs to be considered. A cubic metric (cubic metric, CM) is a criterion that is similar to that of the PAPR and that is for measuring an amplitude change of a signal, and has impact similar to that of the PAPR. Generally, a lower CM indicates better coverage.

A new-generation radio access technology (new radio access technology, NR), namely, 5G, supports a DFT-s-OFDM waveform over uplink. The DFT-s-OFDM waveform has a lower PAPR than an OFDM waveform, so that it can be ensured that the terminal device backs off a low power when sending a signal, and uplink coverage can be improved. To further reduce the PAPR/CM, NR further supports π/2 BPSK modulation. The π/2 BPSK modulation may be performed according to the following formula:

$$d(i) = \frac{e^{j\frac{\pi}{2}(i \bmod 2)}}{\sqrt{2}}[(1 - 2b(\mathrm{i})) + j(1 - 2b(\mathrm{i}))] \quad (1)$$

$b$(i) is a bit of to-be-modulated information. Each of these bits is a value in {0, 1}. The bit herein may be an encoded bit, or a bit obtained by processing an encoded bit. The processing may be scrambling, interleaving, or the like. i is an index of a network (or a cell), and is usually an integer starting from 0. j is $\sqrt{-1}$ . d(i) is a symbol obtained through π/2 BPSK modulation. mod is a modulo operation. It can be learned that a phase difference between any two adjacent modulated symbols in a π/2 BPSK modulated symbol sequence is 90°, so that it can be ensured that modulated information has a low PAPR or CM after a baseband processing procedure. The baseband processing procedure may be one or more of layer mapping (only single-stream transmission is supported), RE mapping, precoding (only single-stream transmission is supported, and a precoding matrix includes only one column), OFDM waveform generation, or the like. The precoding is multiple-input multiple-output (multiple-input multiple-output, MIMO) precoding.

LTE also supports the DFT-s-OFDM waveform over uplink. When the terminal device is provided with a plurality of transmit antenna ports, to-be-sent information needs to be precoded. To ensure that the PAPRs before and after precoding remain unchanged, the to-be-sent information may be precoded by using a non-coherent precoding matrix or a partially-coherent precoding matrix. For example, when the terminal device is provided with four transmit antenna ports and a transmission rank (namely, a quantity of transport layers) is 2, the precoding matrix may be shown in Table 1.

**Table 1 Precoding matrix**

| Codebook index (codebook index) | Precoding matrix | | | |
|---|---|---|---|---|
| 0-3 | $\frac{1}{2}\begin{bmatrix} 1 & 0 \\ 1 & 0 \\ 0 & 1 \\ 0 & -j \end{bmatrix}$ | $\frac{1}{2}\begin{bmatrix} 1 & 0 \\ 1 & 0 \\ 0 & 1 \\ 0 & j \end{bmatrix}$ | $\frac{1}{2}\begin{bmatrix} 1 & 0 \\ -j & 0 \\ 0 & 1 \\ 0 & 1 \end{bmatrix}$ | $\frac{1}{2}\begin{bmatrix} 1 & 0 \\ -j & 0 \\ 0 & 1 \\ 0 & -1 \end{bmatrix}$ |
| 4-7 | $\frac{1}{2}\begin{bmatrix} 1 & 0 \\ -1 & 0 \\ 0 & 1 \\ 0 & -j \end{bmatrix}$ | $\frac{1}{2}\begin{bmatrix} 1 & 0 \\ -1 & 0 \\ 0 & 1 \\ 0 & j \end{bmatrix}$ | $\frac{1}{2}\begin{bmatrix} 1 & 0 \\ j & 0 \\ 0 & 1 \\ 0 & 1 \end{bmatrix}$ | $\frac{1}{2}\begin{bmatrix} 1 & 0 \\ j & 0 \\ 0 & 1 \\ 0 & -1 \end{bmatrix}$ |
| 8-11 | $\frac{1}{2}\begin{bmatrix} 1 & 0 \\ 0 & 1 \\ 1 & 0 \\ 0 & 1 \end{bmatrix}$ | $\frac{1}{2}\begin{bmatrix} 1 & 0 \\ 0 & 1 \\ 1 & 0 \\ 0 & -1 \end{bmatrix}$ | $\frac{1}{2}\begin{bmatrix} 1 & 0 \\ 0 & 1 \\ -1 & 0 \\ 0 & 1 \end{bmatrix}$ | $\frac{1}{2}\begin{bmatrix} 1 & 0 \\ 0 & 1 \\ -1 & 0 \\ 0 & -1 \end{bmatrix}$ |
| 12-15 | $\frac{1}{2}\begin{bmatrix} 1 & 0 \\ 0 & 1 \\ 0 & 1 \\ 1 & 0 \end{bmatrix}$ | $\frac{1}{2}\begin{bmatrix} 1 & 0 \\ 0 & 1 \\ 0 & -1 \\ 1 & 0 \end{bmatrix}$ | $\frac{1}{2}\begin{bmatrix} 1 & 0 \\ 0 & 1 \\ 0 & 1 \\ -1 & 0 \end{bmatrix}$ | $\frac{1}{2}\begin{bmatrix} 1 & 0 \\ 0 & 1 \\ 0 & -1 \\ -1 & 0 \end{bmatrix}$ |

It can be learned from Table 1 that each row of the precoding matrix has only one non-zero value, to ensure that the precoded to-be-sent information is obtained by multiplying the to-be-sent information before precoding by a coefficient having a same modulus value. It can be learned from Table 1 that a quantity of rows of the precoding matrix is equal to a quantity of transmit antenna ports, and a quantity of columns of the precoding matrix is equal to the quantity of transport layers.

The π/2 BPSK modulation has a lower PAPR/CM than quadrature phase shift keying (quadrature phase shift keying, QPSK) modulation. Therefore, by using the π/2 BPSK modulation and the DFT-s-OFDM waveform, uplink coverage of NR is improved to some extent compared with that of long term evolution (long term evolution, LTE). When the DFT-s-OFDM waveform supports multi-stream transmission, the to-be-sent information needs to be precoded. By comparing the precoded to-be-sent information with the to-be-sent information before precoding, when the quantity of transport layers is greater than 1, signals of a plurality of layers may be superimposed on a single antenna. Consequently, the PAPR is high, and the network (or cell) coverage is reduced. Therefore, to ensure a low PAPR, the DFT-s-OFDM waveform in NR supports only the single-stream transmission over uplink. In other words, a maximum transmission rank over uplink is 1.

Further, considering the π/2 BPSK modulation, the DFT-s-OFDM waveform in LTE and NR supports only the single-stream transmission. The reason is that during actual information sending, processing such as layer mapping and RE mapping further needs to be performed on modulated symbols, and these operations destroy a characteristic of an existing phase jump of +/-90° of π/2 BPSK. Consequently, the PAPR is increased, and the network (or cell) coverage is reduced.

For example, it is assumed that the quantity of transport layers is v, and after layer mapping is performed on the modulated symbol d(i), a modulated symbol mapped at a $k^{th}$ layer is d(floor(i/v)*v+(i mod v)), where floor(x) is a maximum integer not greater than x and meets i mod v=k. A phase difference between adjacent symbols in the original d(i) is +/-90°. However, the symbol d(floor(i/v)*v+(i mod v)) mapped at the $k^{th}$ layer may have a phase change of 0° or 180°. Consequently, the characteristic of π/2 BPSK is destroyed, and the PAPR is increased.

A codeword (codeword, CW)-to-layer mapping relationship in the 3rd generation partnership project (3rd generation partnership project, 3GPP) may be shown in Table 2.

**Table 2 Codeword-to-layer mapping relationship**

| Quantity of transport layers (number of layers) | Quantity of codewords (number of codewords) | Codeword-to-layer mapping (codeword-to-layer mapping) relationship $i=0, 1, …, M_{symb}^{layer} − 1$ |
|---|---|---|
| 1 | 1 | $x^{(0)}(i) = d^{(0)}(i)\quad M_{symb}^{layer} = M_{symb}^{(0)}$ |
| 2 | 1 | $x^{(0)}(i) = d^{(0)}(2i)$ <br> $x^{(1)}(i) = d^{(0)}(2i+1)\quad M_{symb}^{layer} = M_{symb}^{(0)}/2$ |
| 3 | 1 | $x^{(0)}(i) = d^{(0)}(3i)$ <br> $x^{(1)}(i) = d^{(0)}(3i+1)\quad M_{symb}^{layer} = M_{symb}^{(0)}/3$ <br> $x^{(2)}(i) = d^{(0)}(3i+2)$ |
| 4 | 1 | $x^{(0)}(i) = d^{(0)}(4i)$ <br> $x^{(1)}(i) = d^{(0)}(4i+1)\quad M_{symb}^{layer} = M_{symb}^{(0)}/4$ <br> $x^{(2)}(i) = d^{(0)}(4i+2)$ <br> $x^{(3)}(i) = d^{(0)}(4i+3)$ |
| 5 | 2 | $x^{(0)}(i) = d^{(0)}(2i)$ <br> $x^{(1)}(i) = d^{(0)}(2i+1)$ <br> $M_{symb}^{layer} = M_{symb}^{(0)}/2 = M_{symb}^{(1)}/3$ <br> $x^{(2)}(i) = d^{(1)}(3i)$ <br> $x^{(3)}(i) = d^{(1)}(3i+1)$ <br> $x^{(4)}(i) = d^{(1)}(3i+2)$ |
| 6 | 2 | $x^{(0)}(i) = d^{(0)}(3i)$ <br> $x^{(1)}(i) = d^{(0)}(3i+1)$ |

(continued)

| Quantity of transport layers (number of layers) | Quantity of codewords (number of codewords) | Codeword-to-layer mapping (codeword-to-layer mapping) relationship $i=0, 1, \ldots, M_{symb}^{layer} - 1$ |
|---|---|---|
|  |  | $x^{(2)}(i) = d^{(0)}(3i + 2)$ $M_{symb}^{layer} = M_{symb}^{(0)}/3 = M_{symb}^{(1)}/3$ $x^{(3)}(i) = d^{(1)}(3i)$ $x^{(4)}(i) = d^{(1)}(3i + 1)$ $x^{(5)}(i) = d^{(1)}(3i + 2)$ |
| 7 | 2 | $x^{(0)}(i) = d^{(0)}(3i)$ $x^{(1)}(i) = d^{(0)}(3i + 1)$ $x^{(2)}(i) = d^{(0)}(3i + 2)$ $M_{symb}^{layer} = M_{symb}^{(0)}/3 = M_{symb}^{(1)}/4$ $x^{(3)}(i) = d^{(1)}(4i)$ $x^{(4)}(i) = d^{(1)}(4i + 1)$ $x^{(5)}(i) = d^{(1)}(4i + 2)$ $x^{(6)}(i) = d^{(1)}(4i + 3)$ |
| 8 | 2 | $x^{(0)}(i) = d^{(0)}(4i)$ $x^{(1)}(i) = d^{(0)}(4i + 1)$ $x^{(2)}(i) = d^{(0)}(3i + 2)$ $x^{(3)}(i) = d^{(0)}(4i + 3)$ $M_{symb}^{layer} = M_{symb}^{(0)}/4 = M_{symb}^{(1)}/4$ $x^{(4)}(i) = d^{(1)}(4i)$ $x^{(5)}(i) = d^{(1)}(4i + 1)$ $x^{(6)}(i) = d^{(1)}(4i + 2)$ $x^{(7)}(i) = d^{(1)}(4i + 3)$ |

NR further supports the OFDM waveform over uplink. By using the OFDM waveform and superimposing with a multi-antenna technology, NR may support 4-stream transmission of a single user over uplink. When the quantity of transmit antenna ports of the terminal device is greater than 1, a transmission rate of using the OFDM waveform may be higher than a transmission rate of using the DFT-s-OFDM waveform. When the quantity of transmit antenna ports of the terminal device is greater than 1, the terminal device reports a supported uplink precoding codebook type based on a hardware implementation capability of the terminal device. The uplink precoding codebook type supported by the terminal device may be a non-coherent (non-coherent) wave, a partial/non-coherent (partial/non-coherent) wave, or a full/partial/non-coherent (full/partial/non-coherent) wave.

However, random superposition of signals on different subcarriers in multi-carrier transmission causes a higher PAPR of the OFDM waveform than that of the DFT-s-OFDM waveform. Therefore, in a network (or cell) edge coverage scenario, the DFT-s-OFDM waveform and the $\pi/2$ BPSK modulation may be used. For a network (or cell) center or a terminal device having a high uplink received signal-to-noise ratio (signal to interference plus noise ratio, SINR), the OFDM waveform and the MIMO multi-stream transmission may be used. In a scenario having a low uplink received SINR, how to fully use a plurality of antenna ports of the terminal device while ensuring coverage has become a problem urgently to be resolved.

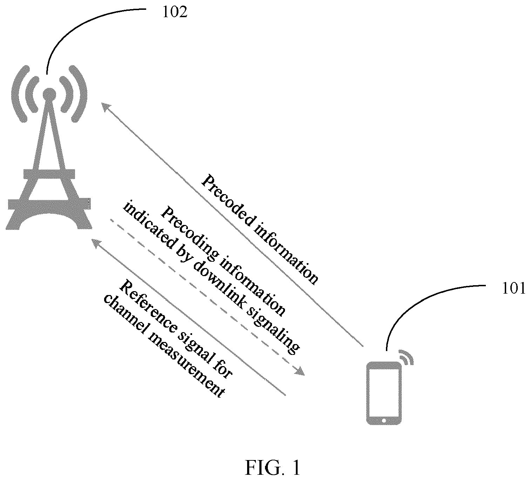

To better understand the communication method and apparatus according to embodiments of the present invention, the following first describes a network architecture used in embodiments of the present invention. FIG. 1 is a schematic diagram of a network architecture according to an embodiment of the present invention. As shown in FIG. 1, the network architecture may include one or more terminal devices 101 (one is shown in FIG. 1) and one or more network devices 102 (one is shown in FIG. 1). The terminal device 101 and the network device 102 may form a MIMO system or another communication system. This is not limited herein.

Communication between the terminal device 101 and the network device 102 includes uplink (to be specific, from the terminal device 101 to the network device 102) communication and downlink (to be specific, from the network device 102 to the terminal device 101) communication. In uplink communication, the terminal device 101 is configured to send an uplink signal to the network device 102; and the network device 102 is configured to receive the uplink signal from the terminal device 101. In downlink communication, the network device 102 is configured to send a downlink signal to the terminal device 101; and the terminal device 101 is configured to receive the downlink signal from the network device 102.

In uplink communication, the uplink signal sent by the terminal device 101 to the network device 102 needs to be precoded. In one manner, the terminal device may precode first information in a precoding manner indicated by the network device. Specifically, the terminal device 101 sends an uplink reference signal for channel measurement to the network device 102. After receiving the uplink reference signal from the terminal device 101, the network device 102 performs channel measurement based on the uplink reference signal, selects a precoding matrix for the terminal device 101 based on a measurement result, and sends, to the terminal device 101 by using downlink signaling, information indication information indicating the precoding matrix. After receiving the indication information from the network device 101, the terminal device 101 may precode the first information based on the precoding matrix indicated by the indication information, and then send the precoded information to the network device 102. In another manner, the network device 102 indicates precoding information used for uplink transmission, and indicates to select a sounding reference signal (sounding reference signal, SRS) resource (a resource such as a time domain resource, a frequency domain resource, a comb resource, a code domain resource, a port resource, or a beam resource). The terminal device 101 may perform channel measurement based on a channel state reference signal (channel state information reference signal, CSI-RS) sent by the network device 102, precode the SRS resource based on a measurement result, send the precoded SRS resource, precode first information based on precoding information corresponding to the SRS resource indicated by the network device, and then send the precoded information to the network device 102.

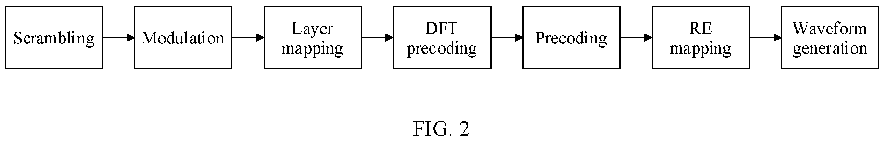

$\pi/2$ BPSK modulation is used for uplink single-carrier transmission. That is, a DFT-s-OFDM waveform is used for uplink transmission. Generally, some or all of processes such as scrambling, modulation, layer mapping, DFT precoding, precoding, RE mapping, and waveform generation need to be performed on to-be-sent information. A specific sequence may be adjusted as required. A RE includes a time domain resource and a frequency domain resource, is a smallest unit used to carry a modulated symbol, and includes one time domain symbol and one frequency domain subcarrier. Generally, the scrambling and the modulation are performed first in this procedure, and the OFDM waveform generation is performed last. FIG. 2 is a required processing procedure before information sending according to an embodiment of the present invention. As shown in FIG. 2, before uplink communication, the terminal device 101 needs to perform one or more processing procedures such as scrambling, modulation, layer mapping, DFT precoding, precoding, RE mapping, and waveform generation on information.

The terminal device 101 may be user equipment (user equipment, UE), customer-premises equipment (customer premise equipment, CPE), an access terminal, a UE unit, a UE station, a mobile station, a remote station, a remote terminal, a mobile device, a UE terminal, a terminal, a wireless communication device, a UE agent, a UE apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a future 5G network, a terminal in a future evolved public land mobile network (public land mobile network, PLMN), or the like.

The network device 102 is a device that may communicate with the terminal device 101, and may be a base station, a relay station, or an access point. The base station may be a base transceiver station (base transceiver station, BTS) in a global system for mobile communications (global system for mobile communication, GSM) or a code division multiple access (code division multiple access, CDMA) network, a node base station (node base station, NB) in wideband code division multiple access (wideband code division multiple access, WCDMA), an evolved (evolutional) NB (eNB or eNodeB) in long term evolution (long term evolution, LTE), a radio controller in a cloud radio access network (cloud radio access network, C-RAN) scenario, a base station device in a future 5G network or a network device in a future evolved PLMN, or a wearable device or a vehicle-mounted device.

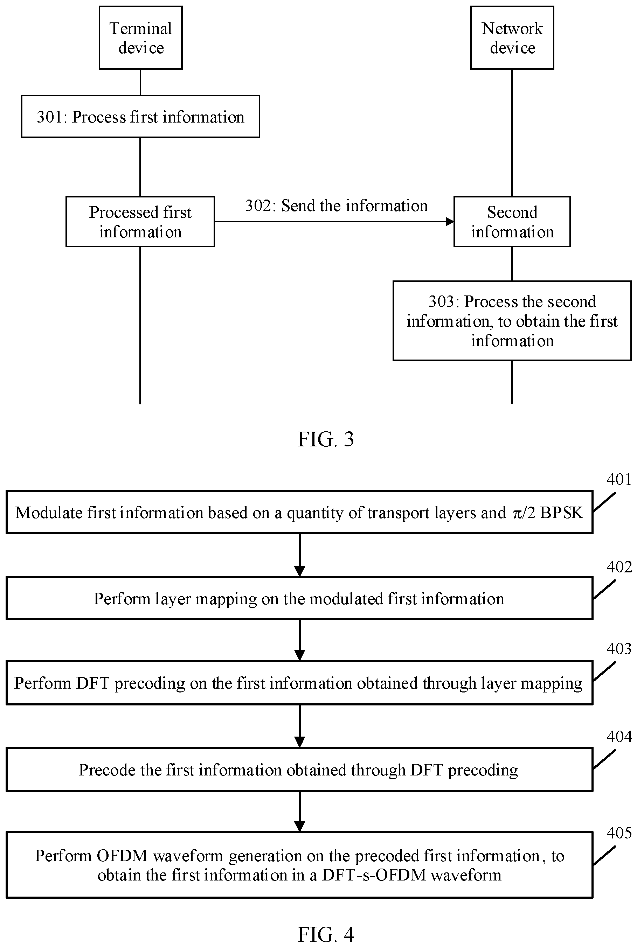

Based on the network architecture shown in FIG. 1, FIG. 3 is a schematic flowchart of a communication method according to an embodiment of the present invention. The following steps performed by the terminal device may alternatively be performed by a module (for example, a chip) in the terminal device, and the following steps performed by the network device may alternatively be performed by a module (for example, a chip) in the network device. As shown in FIG. 3, the communication method may include the following steps.

301: The terminal device processes first information.

When the terminal device needs to send the first information to the network device, to ensure reliability of information transmission, the terminal device needs to first process the first information. A processing process may include $\pi/2$ BPSK modulation, layer mapping, DFT precoding, precoding, and OFDM waveform generation. The first information is information to be sent by the terminal device, and may be data, or signaling or control information, or other information. This is not limited herein.

302: The terminal device sends the information to the network device.

After processing the first information, the terminal device may send the information to the network device. The information sent by the terminal device is the processed first information, and the information received by the network device is second information. The second information is information obtained by performing channel transmission on the processed first information.

303: The network device processes second information, to obtain the first information.

After receiving the information, namely, the second information, from the terminal device, the network device may process the second information, to obtain the first information. The first information herein is the foregoing first information that needs to be sent by the terminal device. A processing process of the network device may include de-$\pi/2$ BPSK modulation, de-layer mapping, de-DFT precoding, and de-OFDM waveform. A process of processing the second information by the network device is an inverse process of a process of processing the first information by the terminal device. The de-$\pi/2$ BPSK modulation is an inverse process of the $\pi/2$ BPSK modulation, the de-layer mapping is an inverse process of the layer mapping, the de-DFT precoding is an inverse process of the DFT precoding, the de-OFDM waveform is an inverse process of the OFDM waveform generation, and MIMO equalization is an inverse process of the precoding.

Optionally, FIG. 4 is a schematic flowchart of processing first information by a terminal device according to an embodiment of the present invention. The following steps performed by the terminal device may alternatively be performed by a module (for example, a chip) in the terminal device. As shown in FIG. 4, step 301 may include the following steps.

401: Modulate the first information based on a quantity of transport layers and $\pi/2$ BPSK.

The terminal device may first modulate the first information, and specifically, may modulate the first information based on the quantity of transport layers and $\pi/2$ BPSK. $\pi/2$ BPSK is a modulation scheme, and the quantity of transport layers is greater than or equal to 1. When the quantity of transport layers is 1, transmission is single-stream transmission. When the quantity of transport layers is greater than 1, transmission is multi-stream transmission. Therefore, the single-stream transmission or the multi-stream transmission can be implemented in this embodiment of the present invention. The first information may be modulated based on the quantity of transport layers and $\pi/2$ BPSK according to the following formula:

$$d(i) = \frac{e^{j\frac{\pi}{2}\left(\left\lfloor\frac{i}{C}\right\rfloor \bmod 2\right)}}{\sqrt{2}}\left[\left(1 - 2b(i)\right) + j(1 - 2b(i))\right] \quad (2)$$

or

$$d(i) = \frac{e^{j\frac{\pi}{2}\left(\left\lceil\frac{i}{C}\right\rceil \bmod 2\right)}}{\sqrt{2}}\left[\left(1 - 2b(i)\right) + j(1 - 2b(i))\right] \quad (3)$$

$b(i)$ is a bit of the first information. C is a parameter related to the quantity of transport layers. Preferably, C may be the quantity of transport layers, and C may be indicated by the network device, or may be preconfigured. For example, C may be indicated by using downlink control information (downlink control information, DCI), media access control (media access control, MAC) information, or a radio resource control (radio resource control, RRC) message.

$d(i)$ is a symbol of the modulated first information. $\lfloor \cdot \rfloor$ is rounding down, and $\lceil \cdot \rceil$ is rounding up. The formula for modulating the first information based on the quantity of transport layers and $\pi/2$ BPSK may alternatively be various variations of the foregoing formula (2) or formula (3). A phase difference between any two adjacent modulated symbols in a $\pi/2$ BPSK modulated symbol sequence is 90°, but the phase difference between adjacent symbols at a same transport layer after layer mapping may be 0° or 180° instead of 90°. Therefore, the first information is modulated based on the quantity of transport layers and π/2 BPSK, which considers impact of the layer mapping on the phase difference between the modulated adjacent symbols, so that it can be ensured that the phase difference between the adjacent symbols at each of different transport layers is 90°, the impact of the layer mapping on the phase difference between the adjacent symbols can be avoided, and therefore the PAPR can be reduced. In addition, the quantity of transport layers may be greater than or equal to 1, so that single-stream or multi-stream transmission can be implemented when π/2 BPSK is used for modulation.

402: Perform layer mapping on the modulated first information.

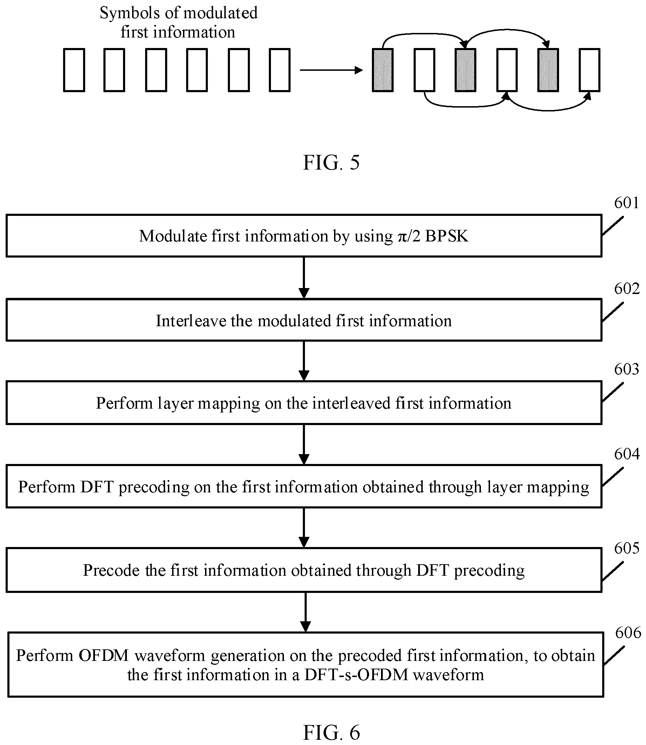

After modulating the first information based on the quantity of transport layers and π/2 BPSK, the terminal device may perform layer mapping on the modulated first information. Specifically, the modulated symbols may be mapped to different transport layers based on the quantity of transport layers and a codeword-to-layer mapping relationship. The modulated symbols corresponding to adjacent bits in the first information may be layer mapped to different transport layers. A phase difference before layer mapping may be 0° or 180°. However, if a quantity of symbols between two symbols is equal to the quantity of transport layers minus 1, a phase difference between the two symbols is 90°. In this way, the modulated symbols corresponding to the adjacent bits are layer mapped to different transport layers, so that it can be ensured that the phase difference between the adjacent symbols at each of different transport layers is 90°, the impact of the layer mapping on the phase difference between the adjacent symbols can be avoided, and therefore the PAPR can be reduced. For example, FIG. 5 is a layer mapping manner in which a quantity of transport layers (namely, a rank) is 2 according to an embodiment of the present invention. As shown in FIG. 5, the modulated first information includes six symbols, the first symbol, the third symbol, and the fifth symbol are mapped to a transport layer, and the second symbol, the fourth symbol, and the sixth symbol are mapped to another transport layer. Therefore, even if a phase difference between the six adjacent symbols may be 0° or 180°, the adjacent symbols are mapped to different transport layers, to be specific, a phase difference between adjacent symbols in the first symbol, the third symbol, and the fifth symbol that are mapped to a same transport layer, and adjacent symbols in the second symbol, the fourth symbol, and the sixth symbol that are mapped to a same transport layer is 90°. Therefore, impact of layer mapping on a PAPR can be avoided.

403: Perform DFT precoding on the first information obtained through layer mapping.

After performing layer mapping on the modulated first information, the terminal device may perform DFT precoding on the first information obtained through layer mapping. Specifically, DFT transform is performed on symbols obtained through layer mapping at each of different transport layers. During DFT precoding, in addition to the symbols corresponding to the first information, the symbols at each transport layer may further include symbols corresponding to a phase tracking reference signal (phase tracking reference signal, PTRS), a demodulation reference signal (demodulation reference signal, DMRS), an SRS, a physical uplink control channel (physical uplink control channel, PUCCH), and the like.

404: Precode the first information obtained through DFT precoding.

After performing DFT precoding on the first information obtained through layer mapping, the terminal device may precode the first information obtained through DFT precoding. Specifically, the first information obtained through DFT precoding may be precoded based on a precoding matrix. To be specific, the symbols of the first information obtained through DFT precoding at different transport layers may be encoded to transmit antenna ports based on the precoding matrix. A quantity of rows of the precoding matrix is equal to a quantity of transmit antenna ports, the quantity of transmit antenna ports is greater than or equal to 1, a quantity of columns of the precoding matrix is equal to the quantity of transport layers, and codewords included in the precoding matrix are non-coherent codewords or partially-coherent codewords. When the codewords included in the precoding matrix are the non-coherent codewords, the precoding matrix is a non-coherent precoding matrix. When the codewords included in the precoding matrix are the partially-coherent codewords, the precoding matrix is a partially-coherent precoding matrix. The non-coherent codeword means that each column includes only one non-zero element and non-zero elements in any two columns of each precoding matrix are located at different rows, and the partially-coherent codeword means that at least one column includes at least one zero element and at least two non-zero elements. When provided with a plurality of transmit antenna ports, the terminal device needs to precode the information. To ensure that the PAPRs before and after precoding remain unchanged, to-be-sent information may be precoded by using the non-coherent precoding matrix or the partially-coherent precoding matrix, so that it can be ensured that the PAPR is not affected during multi-stream transmission. The precoding herein is MIMO precoding. The precoding matrix may be directly indicated by the network device, and the terminal device precodes the first information based on the precoding matrix indicated by the network device. Alternatively, SRS resource indication information may be indicated by the network device, and the terminal device determines, based on precoding on an SRS indicated by the SRS resource indication information, the precoding matrix corresponding to the first information.

405: Perform OFDM waveform generation on the precoded first information, to obtain the first information in a DFT-s-OFDM waveform.

After precoding the first information obtained through DFT precoding, the terminal device may perform OFDM waveform generation on the precoded first information, to obtain the first information in a DFT-s-OFDM waveform, to be specific, perform OFDM waveform generation on the symbol on each of the transmit antenna ports, to obtain the first information in a DFT-s-OFDM waveform.

Optionally, FIG. 6 is a schematic flowchart of processing first information by another terminal device according to an embodiment of the present invention. The following steps performed by the terminal device may alternatively be performed by a module (for example, a chip) in the terminal device. As shown in FIG. 6, step 301 may include the following steps.

601: Modulate the first information by using $\pi/2$ BPSK.

The terminal device may first modulate the first information by using $\pi/2$ BPSK, and the formula (1) may be used when the first information is modulated by using $\pi/2$ BPSK. A formula for modulating the first information by using $\pi/2$ BPSK may alternatively be various variations of the foregoing formula (1). For detailed descriptions, refer to related descriptions in step 401.

602: Interleave the modulated first information.

After modulating the first information by using $\pi/2$ BPSK, the terminal device may interleave the modulated first information. When the modulated first information is interleaved, the modulated first information may be interleaved based on a quantity of transport layers and a quantity of bits included in the first information. The terminal device may interleave the modulated first information according to a formula:

$$d'(i) = d\left(\left(\text{i} \bmod \frac{S}{C}\right) * C + \left\lfloor \frac{i*C}{S} \right\rfloor\right) \ (4)$$

$d'(i)$ is a symbol of the interleaved first information. C is the quantity of transport layers. The quantity of bits in the first information is T. S may be T, or a positive integer that is greater than T and that can exactly divide C.

For example, the modulated first information may be interleaved by using the following interleaving matrix:

$$\begin{bmatrix} d(0) & d(1) & \cdots & d(S/C - 1) \\ d(S/C) & d(S/C + 1) & \cdots & d(2 * S/C - 1) \\ & \vdots & \vdots & \\ d((C-1)*S/C - 1) & d((C-1)*S/C) \cdots & & d(s-1) \end{bmatrix}$$

d(i) in the interleaving matrix may be input in a sequence of first rows and then columns, and is then read in a sequence of first columns and then rows, to obtain $d'(i)$.

603: Perform layer mapping on the interleaved first information.

After interleaving the modulated first information, the terminal device may perform layer mapping on the interleaved first information. Specifically, the modulated symbols may be mapped to different transport layers based on the quantity of transport layers and a codeword-to-layer mapping relationship. The phase difference between any two adjacent modulated symbols in the $\pi/2$ BPSK modulated symbol sequence is 90°, but the phase difference between adjacent symbols at a same transport layer after layer mapping may be 0° or 180°. Therefore, the first information may be sequentially modulated and interleaved, and layer mapping is then performed on the interleaved first information, so that it can be ensured that the phase difference between the adjacent symbols at each of different transport layers is 90°, impact of the layer mapping on the phase difference between the adjacent symbols can be avoided, and therefore the PAPR can be reduced.

604: Perform DFT precoding on the first information obtained through layer mapping.

Step 604 is the same as step 403. For detailed descriptions, refer to the descriptions in step 403.

605: Precode the first information obtained through DFT precoding.

Step 605 is the same as step 404. For detailed descriptions, refer to the descriptions in step 404.

606: Perform OFDM waveform generation on the precoded first information, to obtain the first information in a DFT-s-OFDM waveform.

Step 606 is the same as step 405. For detailed descriptions, refer to the descriptions in step 405.

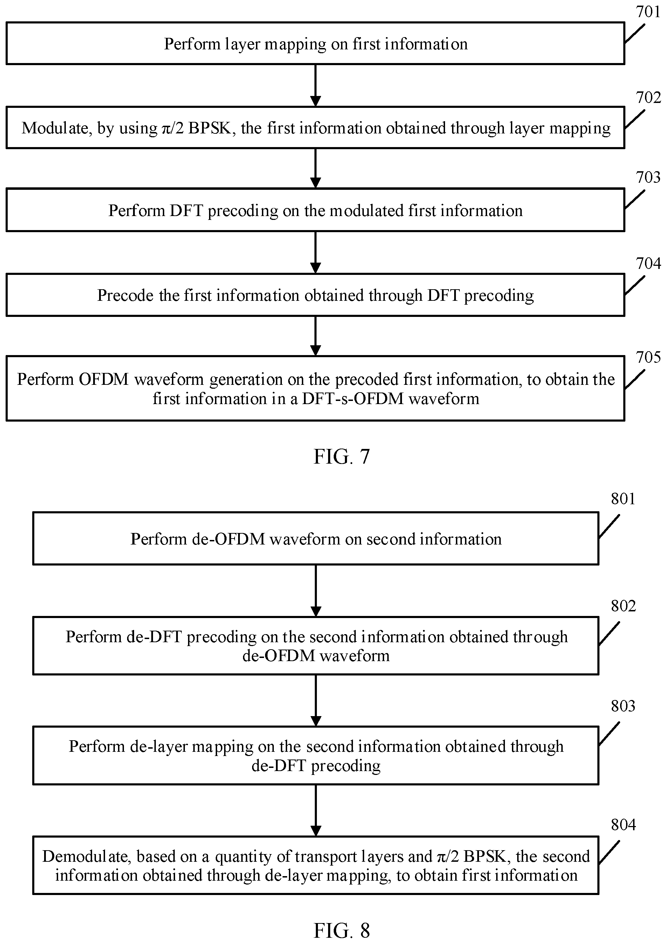

Optionally, FIG. 7 is still another schematic flowchart of processing first information by a terminal device according to an embodiment of the present invention. The following steps performed by the terminal device may alternatively be performed by a module (for example, a chip) in the terminal device. As shown in FIG. 7, step 301 may include the following steps.

701: Perform layer mapping on the first information.

The terminal device may first perform layer mapping on the first information. Specifically, the bits of the first information may be mapped to different transport layers based on the quantity of transport layers and a codeword-to-layer mapping relationship. The terminal device may map consecutive C bits b((k-1)*C), b((k-1)*C+1), ⋯, and b((k-1)*C+C-1) in the bits of the first information to C different transport layers. C is the quantity of transport layers, and k is a positive integer. Alternatively, a quantity M(t) of bits that need to be mapped to each transport layer may be determined based on the quantity of transport layers and the quantity of bits of the first information, where t=1, 2, ⋯, or C, the first M(1) bits in the bits of the first information are then mapped to the first transport layer based on the codeword-to-layer mapping relationship, and the $(M(1)+1)^{th}$ bit to the $(M(2))^{th}$ bit in the bits of the first information are mapped to the second transport layer, until the last $(M(C))^{th}$ bit in the bits of the first information is mapped to the $C^{th}$ transport layer. Alternatively, another mapping manner may be used. This is not limited herein.

702: Modulate the first information obtained through layer mapping by using π/2 BPSK.

After performing layer mapping on the first information, the terminal device may modulate, by using π/2 BPSK, the first information obtained through layer mapping. Specifically, for bits that are in the first information at each of different transport layers and that are mapped to the transport layer, the terminal device may separately modulate, by using π/2 BPSK, the first information obtained through layer mapping, to be specific, separately modulate different transport layers by using π/2 BPSK. That is, modulation of different transport layers is independent of each other, but modulation schemes used at different transport layers are all π/2 BPSK. A formula for modulating the first information by using π/2 BPSK may be the formula (1), or may be various variations of the formula (1). For detailed descriptions, refer to related descriptions in step 401.

703: Perform DFT precoding on the modulated first information.

After modulating, by using π/2 BPSK, the first information obtained through layer mapping, the terminal device may perform DFT precoding on the modulated first information. The step of performing DFT precoding on the modulated first information is the same as step 403. For detailed descriptions, refer to the descriptions in step 403.

704: Precode the first information obtained through DFT precoding.

Step 704 is the same as step 404. For detailed descriptions, refer to the descriptions in step 404.

705: Perform OFDM waveform generation on the precoded first information, to obtain the first information in a DFT-s-OFDM waveform.

Step 705 is the same as step 405. For detailed descriptions, refer to the descriptions in step 405.

Optionally, the process of processing the first information by the terminal device may further include RE mapping. After precoding the first information obtained through DFT precoding, the terminal device may perform RE mapping on the precoded first information, to be specific, perform RE mapping on symbols on the transmit antenna ports in a manner of first frequency domain and then time domain. The terminal device then performs OFDM waveform generation on the first information obtained through RE mapping, to obtain the first information in a DFT-s-OFDM waveform, to be specific, separately performs OFDM waveform generation on the symbol obtained through RE mapping on each of the transmit antenna ports. That is, when performing RE mapping on the precoded first information, the terminal device performs frequency domain mapping and then performs time domain mapping.

Optionally FIG. 8 is a schematic flowchart of processing second information by a network device according to an embodiment of the present invention. The following steps performed by the network device may alternatively be performed by a module (for example, a chip) in the network device. As shown in FIG. 8, step 303 may include the following steps.

801: Perform de-OFDM waveform on the second information.

A process of processing the first information by the terminal device may be indicated by the network device, or may be preconfigured. Therefore, after receiving the second information from the terminal device, the network device may determine, based on the process that is of processing the information by the terminal device and that is determined by the terminal device, a corresponding process of processing the second information. Therefore, after receiving the second information, the network device may first perform de-OFDM waveform on the second information, to obtain the precoded first information.

Optionally, after performing de-OFDM waveform on the second information, the network device may perform MIMO equalization on the second information obtained through de-OFDM waveform, to obtain the first information obtained through DFT precoding. MIMO equalization is an inverse process of the precoding.

802: Perform de-DFT precoding on the second information obtained through de-OFDM waveform.

After performing de-OFDM waveform on the second information, the network device may perform de-DFT precoding on the second information obtained through de-OFDM waveform, in other words, perform DFT inverse transform on the second information obtained through de-OFDM waveform.

Optionally, after performing MIMO equalization on the second information obtained through de-OFDM waveform, the network device may perform de-DFT precoding on the second information obtained through MIMO equalization, in other words, perform DFT inverse transform on the second information obtained through MIMO equalization.

803: Perform de-layer mapping on the second information obtained through de-DFT precoding.

After performing de-DFT precoding on the second information obtained through de-OFDM waveform, the network device may perform de-layer mapping on the second information obtained through de-DFT precoding, to be specific, perform, based on a quantity of transport layers and a codeword-to-layer mapping relationship, de-layer mapping on the second information obtained through de-DFT precoding.

804: Demodulate, based on a quantity of transport layers and π/2 BPSK, the second information obtained through de-layer mapping, to obtain the first information.

After performing de-layer mapping on the second information obtained through de-DFT precoding, the network device may demodulate, based on π/2 BPSK and the quantity of transport layers, the second information obtained through de-layer mapping, to obtain the first information. The quantity of transport layers is greater than or equal to 1. Adjacent bits in the first information are obtained by performing de-layer mapping and demodulation on symbols that are from different transport layers and that are in the second information obtained through de-DFT precoding. Step 804 is an inverse process of step 401. For related descriptions, refer to step 401.

The process of processing the second information by the network device shown in FIG. 8 is an inverse process of the process of processing the first information by the terminal device shown in FIG. 4. For detailed descriptions, refer to the foregoing related descriptions.

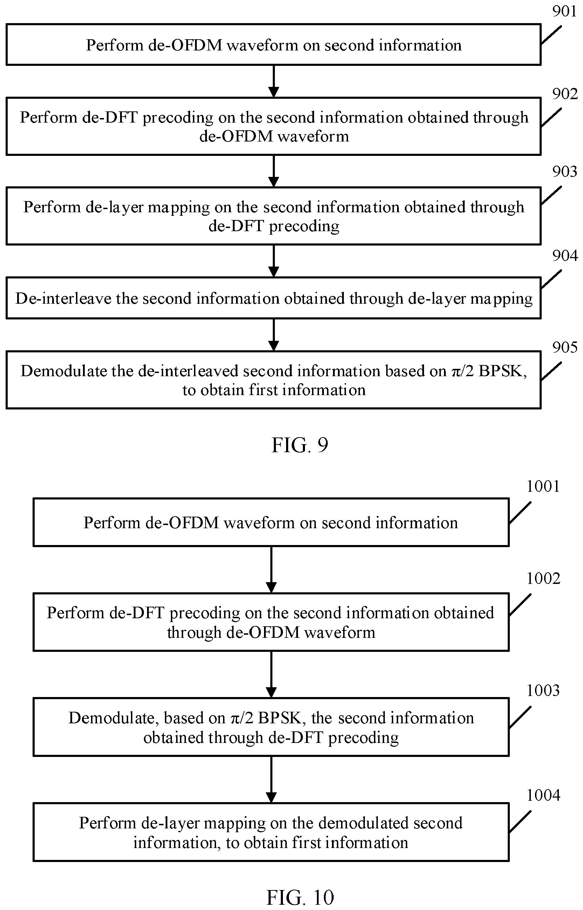

Optionally, FIG. 9 is another schematic flowchart of processing second information by a network device according to an embodiment of the present invention. The following steps performed by the network device may alternatively be performed by a module (for example, a chip) in the network device. As shown in FIG. 9, step 303 may include the following steps.

901: Perform de-OFDM waveform on the second information.

Step 901 is the same as step 801. For detailed descriptions, refer to the descriptions in step 801.

902: Perform de-DFT precoding on the second information obtained through de-OFDM waveform.

Step 902 is the same as step 802. For detailed descriptions, refer to the descriptions in step 802.

903: Perform de-layer mapping on the second information obtained through de-DFT precoding.

Step 903 is the same as step 803. For detailed descriptions, refer to the descriptions in step 803.

904: De-interleave the second information obtained through de-layer mapping.

After performing de-layer mapping on the second information obtained through de-DFT precoding, the network device may de-interleave the second information obtained through de-layer mapping, to obtain the modulated first information. Specifically, the network device may de-interleave, based on a quantity of transport layers and a quantity of bits included in the first information, the second information obtained through de-layer mapping. Step 904 is an inverse process of step 602. For related descriptions, refer to step 602.

905: Demodulate the de-interleaved second information based on π/2 BPSK, to obtain the first information.

After de-interleaving the second information obtained through de-layer mapping, the network device may demodulate the de-interleaved second information based on π/2 BPSK, to obtain the first information. Step 905 is an inverse process of step 601. For related descriptions, refer to step 601.

The process of processing the second information by the network device shown in FIG. 9 is an inverse process of the process of processing the first information by the terminal device shown in FIG. 6. For detailed descriptions, refer to the foregoing related descriptions.

Optionally, FIG. 10 is still another schematic flowchart of processing second information by a network device according to an embodiment of the present invention. The following steps performed by the network device may alternatively be performed by a module (for example, a chip) in the network device. As shown in FIG. 10, step 303 may include the following steps.

1001: Perform de-OFDM waveform on the second information.

Step 1001 is the same as step 801. For detailed descriptions, refer to the descriptions in step 801.

1002: Perform de-DFT precoding on the second information obtained through de-OFDM waveform.

Step 1002 is the same as step 802. For detailed descriptions, refer to the descriptions in step 802.

1003: Demodulate, based on π/2 BPSK, the second information obtained through de-DFT precoding.

After performing de-DFT precoding on the second information obtained through de-OFDM waveform, the network device may demodulate, based on π/2 BPSK, the second information obtained through de-DFT precoding. Step 1003 is an inverse process of step 702. For related descriptions, refer to step 702.

1004: Perform de-layer mapping on the demodulated second information, to obtain the first information.

After demodulating, based on π/2 BPSK, the second information obtained through de-DFT precoding, the network device may perform de-layer mapping on the demodulated second information, to obtain the first information. Step 1004 is an inverse process of step 701. For related descriptions, refer to step 701.

The process of processing the second information by the network device shown in FIG. 10 is an inverse process of the process of processing the first information by the terminal device shown in FIG. 7. For detailed descriptions, refer to the foregoing related descriptions.

Optionally, the process of processing the second information by the network device may further include de-RE mapping. The network device may perform de-RE mapping on the second information obtained through de-OFDM waveform, and then perform de-DFT precoding on the second information obtained through de-RE mapping. The de-RE mapping is performed in a manner of first time domain and then frequency domain. The de-RE mapping is an inverse process of the RE mapping. For detailed descriptions, refer to the foregoing related descriptions of the RE mapping.

Optionally, the modulation scheme of π/2 BPSK used by the terminal device is configured by the network device. The network device may perform configuration by using higher layer signaling, or may perform indication by using physical layer control signaling, or may perform configuration in another manner. This is not limited herein. For example, the network device may determine π/2 BPSK as the modulation scheme of the terminal device, and then send, to the terminal device, first indication information indicating that the modulation scheme is π/2 BPSK and transmission of more than one layer is allowed. After receiving the first indication information from the network device, the terminal device may determine, based on the first indication information, that the modulation scheme is π/2 BPSK. In addition, the terminal device may further determine, based on the first indication information, that when the π/2 BPSK modulation scheme is used, the transmission may be the multi-stream transmission.

Optionally, the network device may send, to the terminal device, second indication information indicating a precoding matrix. The second indication information indicates at least precoding information. For an uplink transmission manner based on a codebook, a precoding codebook corresponding to the precoding information includes only precoding codewords in a non-coherent codebook or a partially-coherent codebook. For an uplink transmission manner based on a non-coherent codebook, the precoding information may be indicated by using an SRS resource. After receiving the second indication information from the terminal device, the terminal device may determine the precoding matrix based on the second indication information.

Optionally, the terminal device may report capability information of the terminal device to the network device. The capability information of the terminal device may include different types of precoding codebooks. The type of precoding codebook may be a non-coherent wave, or a partial/non-coherent wave, or a full/partial/non-coherent wave, or another type of precoding codebook. After receiving the capability information reported by the terminal device, the network device may send configuration information based on the capability information reported by the terminal device. The configuration information indicates a codebook used by the terminal device. The codebook indicated by the configuration information may include the non-coherent codebook or the partially-coherent codebook.

In the communication method, a phase difference between two modulated symbols mapped to adjacent REs in frequency domain at a same MIMO layer (namely, a transport layer) may be ±90°. The precoding matrix uses the non-coherent codewords or the partially-coherent codewords, so that the symbol finally sent on each transmit antenna port still meets a feature of a low PAPR/CM of the π/2 BPSK modulation and the DFT-s-OFDM waveform.

Mutual reference may be made to the content of the foregoing several embodiments, and the content of each embodiment is not limited to this embodiment, and is also applicable to the corresponding content in other embodiments.

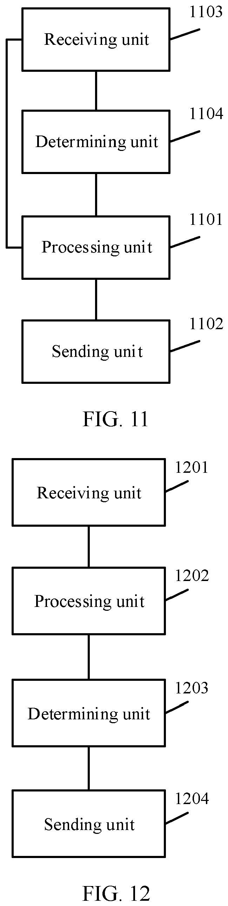

Based on the network architecture shown in FIG. 1 and a same concept as the communication methods in the foregoing embodiments, FIG. 11 is a schematic diagram of a structure of a communication apparatus according to an embodiment of the present invention. As shown in FIG. 11, the communication apparatus may include:

a processing unit 1101, configured to process first information, where a processing process includes π/2 BPSK modulation, layer mapping, DFT precoding, precoding, and OFDM waveform generation; and
a sending unit 1102, configured to send the processed first information to a network device.

In an embodiment, the processing unit 1101 is specifically configured to:

modulate the first information based on a quantity of transport layers and π/2 BPSK, where the quantity of transport layers is greater than or equal to 1;
perform layer mapping on the modulated first information;
perform DFT precoding on the first information obtained through layer mapping;
precode the first information obtained through DFT precoding; and
perform OFDM waveform generation on the precoded first information, to obtain the first information in a DFT-s-OFDM waveform; and
the sending unit 1102 is specifically configured to send the first information in a DFT-s-OFDM waveform to the network device.

In an embodiment, modulated symbols corresponding to adjacent bits in the first information are layer mapped to different transport layers.

In an embodiment, the processing process further includes interleaving, and the processing unit 1101 is specifically configured to:

modulate the first information by using π/2 BPSK;
interleave the modulated first information;

perform layer mapping on the interleaved first information;

perform DFT precoding on the first information obtained through layer mapping;

precode the first information obtained through DFT precoding; and

perform OFDM waveform generation on the precoded first information, to obtain the first information in a DFT-s-OFDM waveform; and

the sending unit 1102 is specifically configured to send the first information in a DFT-s-OFDM waveform to the network device.

In an embodiment, that the processing unit 1101 interleaves the modulated first information includes: interleaving the modulated first information based on a quantity of transport layers and a quantity of bits included in the first information.

In an embodiment, the processing unit 1101 is specifically configured to:

perform layer mapping on the first information;

modulate, by using $\pi$/2 BPSK, the first information obtained through layer mapping;

perform DFT precoding on the modulated first information;

precode the first information obtained through DFT precoding; and

perform OFDM waveform generation on the precoded first information, to obtain the first information in a DFT-s-OFDM waveform; and

the sending unit 1102 is specifically configured to send the first information in a DFT-s-OFDM waveform to the network device.

In an embodiment, the processing process further includes RE mapping, and the processing unit 1101 is specifically further configured to perform RE mapping on the precoded first information.

That the processing unit 1101 performs OFDM waveform generation on the precoded first information, to obtain the first information in a DFT-s-OFDM waveform includes:

performing OFDM waveform generation on the first information obtained through RE mapping, to obtain the first information in a DFT-s-OFDM waveform.

In an embodiment, that the processing unit 1101 precodes the first information obtained through DFT precoding includes:

precoding, based on a precoding matrix, the first information obtained through DFT precoding, where a quantity of rows of the precoding matrix is equal to a quantity of transmit antenna ports, a quantity of columns of the precoding matrix is equal to a quantity of transport layers, and codewords included in the precoding matrix are non-coherent codewords or partially-coherent codewords.

In an embodiment, the communication apparatus further includes:

a receiving unit 1103, configured to receive, from the network device, first indication information indicating that a modulation scheme is $\pi$/2 BPSK and transmission of more than one layer is allowed; and

a determining unit 1104, configured to determine, based on the first indication information, that the modulation scheme is $\pi$/2 BPSK.

In an embodiment, the receiving unit 1103 is further configured to receive, from the network device, second indication information indicating a precoding matrix.

That the processing unit 1101 precodes, based on a precoding matrix, the first information obtained through DFT precoding includes:

precoding, based on the precoding matrix indicated by the second indication information, the first information obtained through DFT precoding.

For more detailed descriptions of the processing unit 1101, the sending unit 1102, the receiving unit 1103, and the determining unit 1104, directly refer to related descriptions of the terminal device in the method embodiments shown in FIG. 3, FIG. 4, FIG. 6, and FIG. 7. Details are not described herein again.

Based on the network architecture shown in FIG. 1 and a same concept as the communication methods in the foregoing embodiments, FIG. 12 is a schematic diagram of a structure of another communication apparatus according to an embodiment of the present invention. As shown in FIG. 12, the communication apparatus may include:

a receiving unit 1201, configured to receive second information from a terminal device; and

a processing unit 1202, configured to process the second information, to obtain first information, where the first information is information sent by the terminal device, and a processing process includes de-$\pi$/2 BPSK modulation, de-layer mapping, de-DFT precoding, and de-OFDM waveform.

In an embodiment, the processing unit 1202 is specifically configured to:

perform de-OFDM waveform on the second information;
perform de-DFT precoding on the second information obtained through de-OFDM waveform;
perform de-layer mapping on the second information obtained through de-DFT precoding; and
demodulate, based on a quantity of transport layers and $\pi/2$ BPSK, the second information obtained through de-layer mapping, to obtain the first information, where the quantity of transport layers is greater than or equal to 1.

In an embodiment, adjacent bits in the first information are obtained by performing de-layer mapping and demodulation on symbols that are from different transport layers and that are in the second information obtained through de-DFT precoding.

In an embodiment, the processing process further includes de-interleaving, and the processing unit 1202 is specifically configured to:

perform de-OFDM waveform on the second information;
perform de-DFT precoding on the second information obtained through de-OFDM waveform;
perform de-layer mapping on the second information obtained through de-DFT precoding;
de-interleave the second information obtained through de-layer mapping; and
demodulate the de-interleaved second information based on $\pi/2$ BPSK, to obtain the first information.

In an embodiment, that the processing unit 1202 de-interleaves the second information obtained through de-layer mapping includes:
de-interleaving, based on a quantity of transport layers and a quantity of bits included in the first information, the second information obtained through de-layer mapping.

In an embodiment, the processing unit 1202 is specifically configured to:

perform de-OFDM waveform on the second information;
perform de-DFT precoding on the second information obtained through de-OFDM waveform;
demodulate, based on $\pi/2$ BPSK, the second information obtained through de-DFT precoding; and
perform de-layer mapping on the demodulated second information, to obtain the first information.

In an embodiment, the processing process further includes de-RE mapping, and the processing unit 1202 is specifically further configured to perform de-RE mapping on the second information obtained through de-OFDM waveform.

That the processing unit 1202 performs de-DFT precoding on the second information obtained through de-OFDM waveform includes:
performing de-DFT precoding on the second information obtained through de-RE mapping.

In an embodiment, the communication apparatus may further include:

a determining unit 1203, configured to determine $\pi/2$ BPSK as a modulation scheme of the terminal device; and
a sending unit 1204, configured to send, to the terminal device, first indication information indicating that the modulation scheme is $\pi/2$ BPSK and transmission of more than one layer is allowed.

For more detailed descriptions of the receiving unit 1201, the processing unit 1202, the determining unit 1203, and the sending unit 1204, directly refer to related descriptions of the network device in the method embodiments shown in FIG. 3 and FIG. 8 to FIG. 10. Details are not described herein again.

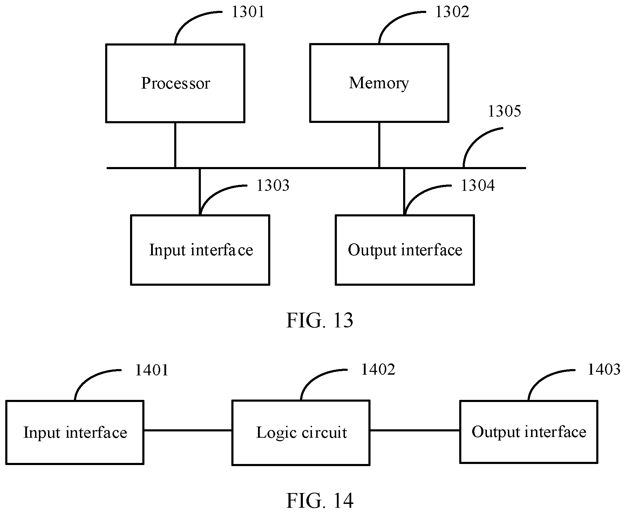

Based on the network architecture described in FIG. 1, FIG. 13 is a schematic diagram of a structure of still another communication apparatus according to an embodiment of the present invention. As shown in FIG. 13, the communication apparatus may include a processor 1301, a memory 1302, an input interface 1303, an output interface 1304, and a bus 1305. The processor 1301 may be a general-purpose central processing unit (CPU), a plurality of CPUs, a microprocessor, an application-specific integrated circuit (application-specific integrated circuit, ASIC), or one or more integrated circuits that are configured to control program execution of solutions of the present invention. The memory 1102 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory 1302 may exist independently, and may be connected to the processor 1301 by using the bus 1305. The memory 1302 may alternatively be integrated with the processor 1301. The bus 1305 is configured to implement connection among these components.

In one case, the communication apparatus may be a terminal device or a module (for example, a chip) in the terminal device.

The processor 1301 is configured to invoke a computer program stored in the memory 1302 to perform the following operations:

processing first information, where a processing process includes $\pi/2$ BPSK modulation, layer mapping, DFT precoding, precoding, and OFDM waveform generation.

The output interface 1304 is configured to send the processed first information to a network device.

In an embodiment, that the processor 1301 processes the first information includes:

modulating the first information based on a quantity of transport layers and $\pi/2$ BPSK, where the quantity of transport layers is greater than or equal to 1;
performing layer mapping on the modulated first information;
performing DFT precoding on the first information obtained through layer mapping;
precoding the first information obtained through DFT precoding; and
performing OFDM waveform generation on the precoded first information, to obtain the first information in a DFT-s-OFDM waveform.

That the output interface 1304 sends the processed first information to the network device includes:
sending the first information in a DFT-s-OFDM waveform to the network device.

In an embodiment, modulated symbols corresponding to adjacent bits in the first information are layer mapped to different transport layers.

In an embodiment, the processing process may further include interleaving, and that the processor 1301 processes the first information includes:

modulating the first information by using $\pi/2$ BPSK;
interleaving the modulated first information;
performing layer mapping on the interleaved first information;
performing DFT precoding on the first information obtained through layer mapping;
precoding the first information obtained through DFT precoding; and
performing OFDM waveform generation on the precoded first information, to obtain the first information in a DFT-s-OFDM waveform.

That the output interface 1304 sends the processed first information to the network device includes:
sending the first information in a DFT-s-OFDM waveform to the network device.

In an embodiment, that the processor 1301 interleaves the modulated first information includes:
interleaving the modulated first information based on a quantity of transport layers and a quantity of bits included in the first information.

In an embodiment, that the processor 1301 processes the first information includes:

performing layer mapping on the first information;
modulating, by using $\pi/2$ BPSK, the first information obtained through layer mapping;
performing DFT precoding on the modulated first information;
precoding the first information obtained through DFT precoding; and
performing OFDM waveform generation on the precoded first information, to obtain the first information in a DFT-s-OFDM waveform.

That the output interface 1304 sends the processed first information to the network device includes:
sending the first information in a DFT-s-OFDM waveform to the network device.

In an embodiment, the processing process may further RE mapping, and that the processor 1301 processes the first information further includes:
performing RE mapping on the precoded first information.

That the processor 1301 performs OFDM waveform generation on the precoded first information, to obtain the first information in a DFT-s-OFDM waveform includes:

performing OFDM waveform generation on the first information obtained through RE mapping, to obtain the first information in a DFT-s-OFDM waveform.

In an embodiment, that the processor 1301 precodes the first information obtained through DFT precoding includes:

precoding, based on a precoding matrix, the first information obtained through DFT precoding, where a quantity of rows of the precoding matrix is equal to a quantity of transmit antenna ports, a quantity of columns of the precoding matrix is equal to a quantity of transport layers, and codewords included in the precoding matrix are non-coherent codewords or partially-coherent codewords.

In an embodiment, the input interface 1303 is configured to receive, from the network device, first indication information indicating that a modulation scheme is $\pi/2$ BPSK and transmission of more than one layer is allowed.

The processor 1301 is further configured to invoke the computer program stored in the memory 1302 to perform the following operations:

determining, based on the first indication information, that the modulation scheme is $\pi/2$ BPSK.

In an embodiment, the input interface 1303 is further configured to receive, from the network device, second indication information indicating a precoding matrix.

That the processor 1301 precodes, based on a precoding matrix, the first information obtained through DFT precoding includes:

precoding, based on the precoding matrix indicated by the second indication information, the first information obtained through DFT precoding.

Step 301 may be performed by the processor 1301 and the memory 1302, the step of receiving, by the terminal device, information from the network device may be performed by the input interface 1303, and the step of sending, by the terminal device, information to the network device may be performed by the output interface 1304.

The processing unit 1101 and the determining unit 1104 may be implemented by the processor 1301 and the memory 1302, the receiving unit 1103 may be implemented by the input interface 1303, and the sending unit 1102 may be implemented by the output interface 1304.

The terminal device or the module in the terminal device may be further configured to perform various methods performed by the terminal device in the foregoing method embodiments. Details are not described again.

In one case, the communication apparatus may be a network device or a chip in a network device.

The input interface 1303 is configured to receive second information from a terminal device.

The processor 1301 is configured to invoke a computer program stored in the memory 1302 to perform the following operations:

processing the second information, to obtain first information, where the first information is information sent by the terminal device, and a processing process includes de-$\pi/2$ BPSK modulation, de-layer mapping, DFT precoding, and OFDM waveform.

In an embodiment, that the processor 1301 processes the second information, to obtain first information includes:

performing de-OFDM waveform on the second information;
performing de-DFT precoding on the second information obtained through de-OFDM waveform;
performing de-layer mapping on the second information obtained through de-DFT precoding; and
demodulating, based on a quantity of transport layers and $\pi/2$ BPSK, the second information obtained through de-layer mapping, to obtain the first information, where the quantity of transport layers is greater than or equal to 1.

In an embodiment, adjacent bits in the first information are obtained by performing de-layer mapping and demodulation on symbols that are from different transport layers and that are in the second information obtained through de-DFT precoding.

In an embodiment, the processing process further includes de-interleaving, and that the processor 1301 processes the second information, to obtain first information includes:

performing de-OFDM waveform on the second information;
performing de-DFT precoding on the second information obtained through de-OFDM waveform;
performing de-layer mapping on the second information obtained through de-DFT precoding;
de-interleaving the second information obtained through de-layer mapping; and
demodulating the de-interleaved second information based on $\pi/2$ BPSK, to obtain the first information.

In an embodiment, that the processor 1301 de-interleaves the second information obtained through de-layer mapping includes:

de-interleaving, based on a quantity of transport layers and a quantity of bits included in the first information, the second information obtained through de-layer mapping.

In an embodiment, that the processor 1301 processes the second information, to obtain first information includes:

performing de-OFDM waveform on the second information;
performing de-DFT precoding on the second information obtained through de-OFDM waveform;
demodulating, based on π/2 BPSK, the second information obtained through de-DFT precoding; and
performing de-layer mapping on the demodulated second information, to obtain the first information.

In an embodiment, the processing process further includes de-RE mapping, and that the processor 1301 processes the second information, to obtain first information further includes:
performing de-RE mapping on the second information obtained through de-OFDM waveform.

That the processor 1301 performs de-DFT precoding on the second information obtained through de-OFDM waveform includes:
performing de-DFT precoding on the second information obtained through de-RE mapping.

In an embodiment, the processor 1301 is further configured to invoke the computer program stored in the memory 1302 to perform the following operations:
determining π/2 BPSK as a modulation scheme of the terminal device.

The output interface 1304 is configured to send, to the terminal device, first indication information indicating that the modulation scheme is π/2 BPSK and transmission of more than one layer is allowed.

Step 303 may be performed by the processor 1301 and the memory 1302, the step of receiving, by the network device, information from the terminal device may be performed by the input interface 1303, and the step of sending, by the network device, information to the terminal device may be performed by the output interface 1304.

The processing unit 1202 and the determining unit 1203 may be implemented by the processor 1301 and the memory 1302, the receiving unit 1201 may be implemented by the input interface 1303, and the sending unit 1204 may be implemented by the output interface 1304.

The terminal device or the module in the terminal device may be further configured to perform various methods performed by the terminal device in the foregoing method embodiments. Details are not described again.

Based on the network architecture shown in FIG. 1, FIG. 14 is a schematic diagram of a structure of yet another communication apparatus according to an embodiment of the present invention. As shown in FIG. 14, the communication apparatus may include an input interface 1401, a logic circuit 1402, and an output interface 1403. The input interface 1401 is connected to the output interface 1403 through the logic circuit 1402. The input interface 1401 is configured to receive information from another communication apparatus, and the output interface 1403 is configured to output, schedule, or send information to the another communication apparatus. The logic circuit 1402 is configured to perform operations other than operations of the input interface 1401 and the output interface 1403, for example, implement functions implemented by the processor 1301 in the foregoing embodiment. The communication apparatus may be a terminal device or a module in the terminal device, or may be a network device or a module in the network device. For more detailed descriptions of the input interface 1401, the logic circuit 1402, and the output interface 1403, directly refer to related descriptions of the terminal device or the module in the terminal device and the network device or the module in the network device in the foregoing method embodiments. Details are not described herein again.

An embodiment of the present invention further discloses a computer-readable storage medium. The computer-readable storage medium stores instructions. When the instructions are executed, the method in the foregoing method embodiment is performed.

An embodiment of the present invention further discloses a computer program product including instructions. When the instructions are executed, the method in the foregoing method embodiment is performed.

An embodiment of the present invention further discloses a communication system. The communication system includes a terminal device and a network device. For specific descriptions, refer to the communication method shown in FIG. 3.

The objectives, technical solutions, and benefit effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

**Claims**

**1.** A communication method, comprising:

processing first information, wherein a processing process comprises π/2 binary phase shift keying BPSK

modulation, layer mapping, discrete Fourier transform DFT precoding, precoding, and orthogonal frequency division multiplexing OFDM waveform generation; and
sending the processed first information to a network device.

2. The method according to claim 1, wherein the processing first information comprises:

modulating the first information based on a quantity of transport layers and $\pi/2$ BPSK, wherein the quantity of transport layers is greater than or equal to 1;
performing layer mapping on the modulated first information;
performing DFT precoding on the first information obtained through layer mapping;
precoding the first information obtained through DFT precoding; and
performing OFDM waveform generation on the precoded first information, to obtain the first information in a discrete Fourier transform spread orthogonal frequency division multiplexing DFT-s-OFDM waveform; and
the sending the processed first information to a network device comprises:
sending the first information in a DFT-s-OFDM waveform to the network device.

3. The method according to claim 2, wherein modulated symbols corresponding to adjacent bits in the first information are layer mapped to different transport layers.

4. The method according to claim 1, wherein the processing process further comprises interleaving, and the processing first information comprises:

modulating the first information by using $\pi/2$ BPSK;
interleaving the modulated first information;
performing layer mapping on the interleaved first information;
performing DFT precoding on the first information obtained through layer mapping;
precoding the first information obtained through DFT precoding; and
performing OFDM waveform generation on the precoded first information, to obtain the first information in a DFT-s-OFDM waveform; and
the sending the processed first information to a network device comprises:
sending the first information in a DFT-s-OFDM waveform to the network device.

5. The method according to claim 4, wherein the interleaving the modulated first information comprises:
interleaving the modulated first information based on a quantity of transport layers and a quantity of bits comprised in the first information.

6. The method according to claim 1, wherein the processing first information comprises:

performing layer mapping on the first information;
modulating, by using $\pi/2$ BPSK, the first information obtained through layer mapping;
performing DFT precoding on the modulated first information;
precoding the first information obtained through DFT precoding; and
performing OFDM waveform generation on the precoded first information, to obtain the first information in a DFT-s-OFDM waveform; and
the sending the processed first information to a network device comprises:
sending the first information in a DFT-s-OFDM waveform to the network device.

7. The method according to any one of claims 2 to 6, wherein the method further comprises:

receiving, from the network device, first indication information indicating that a modulation scheme is $\pi/2$ BPSK and transmission of more than one layer is allowed; and
determining, based on the first indication information, that the modulation scheme is $\pi/2$ BPSK.

8. A communication method, comprising:

receiving second information from a terminal device; and
processing the second information, to obtain first information, wherein the first information is information sent by the terminal device, and a processing process comprises de-$\pi/2$ binary phase shift keying BPSK modulation, de-layer mapping, de-discrete Fourier transform DFT precoding, and de-orthogonal frequency division multiplexing OFDM waveform.

9. The method according to claim 8, wherein the processing the second information, to obtain first information comprises:

performing de-OFDM waveform on the second information;
performing de-DFT precoding on the second information obtained through de-OFDM waveform;
performing de-layer mapping on the second information obtained through de-DFT precoding; and
demodulating, based on a quantity of transport layers and $\pi/2$ BPSK, the second information obtained through de-layer mapping, to obtain the first information, wherein the quantity of transport layers is greater than or equal to 1.

10. The method according to claim 9, wherein adjacent bits in the first information are obtained by performing de-layer mapping and demodulation on symbols that are from different transport layers and that are in the second information obtained through de-DFT precoding.

11. The method according to claim 8, wherein the processing process further comprises de-interleaving, and the processing the second information, to obtain first information comprises:

performing de-OFDM waveform on the second information;
performing de-DFT precoding on the second information obtained through de-OFDM waveform;
performing de-layer mapping on the second information obtained through de-DFT precoding;
de-interleaving the second information obtained through de-layer mapping; and
demodulating the de-interleaved second information based on $\pi/2$ BPSK, to obtain the first information.

12. The method according to claim 11, wherein the de-interleaving the second information obtained through de-layer mapping comprises:
de-interleaving, based on a quantity of transport layers and a quantity of bits comprised in the first information, the second information obtained through de-layer mapping.

13. The method according to claim 8, wherein the processing the second information, to obtain first information comprises:

performing de-OFDM waveform on the second information;
performing de-DFT precoding on the second information obtained through de-OFDM waveform;
demodulating, based on $\pi/2$ BPSK, the second information obtained through de-DFT precoding; and
performing de-layer mapping on the demodulated second information, to obtain the first information.

14. The method according to any one of claims 9 to 13, wherein the method further comprises:

determining $\pi/2$ BPSK as a modulation scheme of the terminal device; and
sending, to the terminal device, first indication information indicating that the modulation scheme is $\pi/2$ BPSK and transmission of more than one layer is allowed.

15. A communication apparatus, comprising:

a processing unit, configured to process first information, wherein a processing process comprises $\pi/2$ binary phase shift keying BPSK modulation, layer mapping, discrete Fourier transform DFT precoding, precoding, and orthogonal frequency division multiplexing OFDM waveform generation; and
a sending unit, configured to send the processed first information to a network device.

16. The apparatus according to claim 15, wherein the processing unit is specifically configured to:

modulate the first information based on a quantity of transport layers and $\pi/2$ BPSK, wherein the quantity of transport layers is greater than or equal to 1;
perform layer mapping on the modulated first information;
perform DFT precoding on the first information obtained through layer mapping;
precode the first information obtained through DFT precoding; and
perform OFDM waveform generation on the precoded first information, to obtain the first information in a discrete Fourier transform spread orthogonal frequency division multiplexing DFT-s-OFDM waveform; and
the sending unit is specifically configured to send the first information in a DFT-s-OFDM waveform to the network device.

**17.** The apparatus according to claim 16, wherein modulated symbols corresponding to adjacent bits in the first information are layer mapped to different transport layers.

**18.** The apparatus according to claim 15, wherein the processing process further comprises interleaving, and the processing unit is specifically configured to:

modulate the first information by using $\pi/2$ BPSK;
interleave the modulated first information;
perform layer mapping on the interleaved first information;
perform DFT precoding on the first information obtained through layer mapping;
precode the first information obtained through DFT precoding; and
perform OFDM waveform generation on the precoded first information, to obtain the first information in a DFT-s-OFDM waveform; and
the sending unit is specifically configured to send the first information in a DFT-s-OFDM waveform to the network device.

**19.** The apparatus according to claim 18, wherein that the processing unit interleaves the modulated first information comprises:
interleaving the modulated first information based on a quantity of transport layers and a quantity of bits comprised in the first information.

**20.** The apparatus according to claim 15, wherein the processing unit is specifically configured to:

perform layer mapping on the first information;
modulate, by using $\pi/2$ BPSK, the first information obtained through layer mapping;
perform DFT precoding on the modulated first information;
precode the first information obtained through DFT precoding; and
perform OFDM waveform generation on the precoded first information, to obtain the first information in a DFT-s-OFDM waveform; and
the sending unit is specifically configured to send the first information in a DFT-s-OFDM waveform to the network device.

**21.** The apparatus according to any one of claims 16 to 20, wherein the apparatus further comprises:

a receiving unit, configured to receive, from the network device, first indication information indicating that a modulation scheme is $\pi/2$ BPSK and transmission of more than one layer is allowed; and
a determining unit, configured to determine, based on the first indication information, that the modulation scheme is $\pi/2$ BPSK.

**22.** A communication apparatus, comprising:

a receiving unit, configured to receive second information from a terminal device; and
a processing unit, configured to process the second information, to obtain first information, wherein the first information is information sent by the terminal device, and a processing process comprises de-$\pi/2$ binary phase shift keying BPSK modulation, de-layer mapping, de-discrete Fourier transform DFT precoding, and de-orthogonal frequency division multiplexing OFDM waveform.

**23.** The apparatus according to claim 22, wherein the processing unit is specifically configured to:

perform de-OFDM waveform on the second information;
perform de-DFT precoding on the second information obtained through de-OFDM waveform;
perform de-layer mapping on the second information obtained through de-DFT precoding; and
demodulate, based on a quantity of transport layers and $\pi/2$ BPSK, the second information obtained through de-layer mapping, to obtain the first information, wherein the quantity of transport layers is greater than or equal to 1.

24. The apparatus according to claim 23, wherein adjacent bits in the first information are obtained by performing de-layer mapping and demodulation on symbols that are from different transport layers and that are in the second information obtained through de-DFT precoding.

25. The apparatus according to claim 22, wherein the processing process further comprises de-interleaving, and the processing unit is specifically configured to:

      perform de-OFDM waveform on the second information;
      perform de-DFT precoding on the second information obtained through de-OFDM waveform;
      perform de-layer mapping on the second information obtained through de-DFT precoding;
      de-interleave the second information obtained through de-layer mapping; and
      demodulate the de-interleaved second information based on $\pi/2$ BPSK, to obtain the first information.

26. The apparatus according to claim 25, wherein that the processing unit de-interleaves the second information obtained through de-layer mapping comprises:
de-interleaving, based on a quantity of transport layers and a quantity of bits comprised in the first information, the second information obtained through de-layer mapping.

27. The apparatus according to claim 22, wherein the processing unit is specifically configured to:

      perform de-OFDM waveform on the second information;
      perform de-DFT precoding on the second information obtained through de-OFDM waveform;
      demodulate, based on $\pi/2$ BPSK, the second information obtained through de-DFT precoding; and
      perform de-layer mapping on the demodulated second information, to obtain the first information.

28. A communication apparatus, comprising a processor, a memory, an input interface, and an output interface, wherein the input interface is configured to receive information from a communication apparatus other than the communication apparatus, the output interface is configured to output information to a communication apparatus other than the communication apparatus, and the processor invokes a computer program stored in the memory, to implement the method according to any one of claims 1 to 14.

29. A communication system, comprising:
the communication apparatus according to any one of claims 15 to 21 and the communication apparatus according to any one of claims 22 to 27.

30. A computer-readable storage medium, wherein the computer-readable storage medium stores a computer program or computer instructions, and when the computer program or the computer instructions are run, the method according to any one of claims 1 to 14 is implemented.

FIG. 1

| Scrambling | → | Modulation | → | Layer mapping | → | DFT precoding | → | Precoding | → | RE mapping | → | Waveform generation |

FIG. 2

Terminal
device

Network
device

301: Process first information

| Processed first information | 302: Send the information → | Second information |

303: Process the second information, to obtain the first information

FIG. 3

Modulate first information based on a quantity of transport layers and π/2 BPSK    401

↓

Perform layer mapping on the modulated first information    402

↓

Perform DFT precoding on the first information obtained through layer mapping    403

↓

Precode the first information obtained through DFT precoding    404

↓

Perform OFDM waveform generation on the precoded first information, to obtain the first information in a DFT-s-OFDM waveform    405

FIG. 4

Symbols of modulated
first information

FIG. 5

Modulate first information by using π/2 BPSK 601

Interleave the modulated first information 602

Perform layer mapping on the interleaved first information 603

Perform DFT precoding on the first information obtained through layer mapping 604

Precode the first information obtained through DFT precoding 605

Perform OFDM waveform generation on the precoded first information, to obtain the first information in a DFT-s-OFDM waveform 606

FIG. 6

701

Perform layer mapping on first information

702

Modulate, by using π/2 BPSK, the first information obtained through layer mapping

703

Perform DFT precoding on the modulated first information

704

Precode the first information obtained through DFT precoding

705

Perform OFDM waveform generation on the precoded first information, to obtain the first information in a DFT-s-OFDM waveform

FIG. 7

801

Perform de-OFDM waveform on second information

802

Perform de-DFT precoding on the second information obtained through de-OFDM waveform

803

Perform de-layer mapping on the second information obtained through de-DFT precoding

804

Demodulate, based on a quantity of transport layers and π/2 BPSK, the second information obtained through de-layer mapping, to obtain first information

FIG. 8

901

Perform de-OFDM waveform on second information

902

Perform de-DFT precoding on the second information obtained through de-OFDM waveform

903

Perform de-layer mapping on the second information obtained through de-DFT precoding

904

De-interleave the second information obtained through de-layer mapping

905

Demodulate the de-interleaved second information based on π/2 BPSK, to obtain first information

FIG. 9

1001

Perform de-OFDM waveform on second information

1002

Perform de-DFT precoding on the second information obtained through de-OFDM waveform

1003

Demodulate, based on π/2 BPSK, the second information obtained through de-DFT precoding

1004

Perform de-layer mapping on the demodulated second information, to obtain first information

FIG. 10

1103

Receiving unit

1104

Determining unit

1101

Processing unit

1102

Sending unit

FIG. 11

1201

Receiving unit

1202

Processing unit

1203

Determining unit

1204

Sending unit

FIG. 12

FIG. 13

FIG. 14

## INTERNATIONAL SEARCH REPORT

| | International application No. |
|---|---|
| | **PCT/CN2020/081230** |

**A. CLASSIFICATION OF SUBJECT MATTER**

H04L 27/38(2006.01)i; H04L 27/26(2006.01)i; H04L 5/00(2006.01)i; H04L 1/00(2006.01)i

According to International Patent Classification (IPC) or to both national classification and IPC

**B. FIELDS SEARCHED**

Minimum documentation searched (classification system followed by classification symbols)

H04L; H04B

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: π/2, pi/2, 层映射, 离散傅里叶变换, 预编码, 峰均比, BPSK, DFT, OFDM, PAPR, layer mapp+, precod+

**C. DOCUMENTS CONSIDERED TO BE RELEVANT**

| Category* | Citation of document, with indication, where appropriate, of the relevant passages | Relevant to claim No. |
|---|---|---|
| X | US 2018324005 A1 (SAMSUNG ELECTRONICS CO., LTD.) 08 November 2018 (2018-11-08)<br>  description, paragraphs 47-97, figures 3, 4 | 1-30 |
| X | CN 109756440 A (LONGBO COMMUNICATION TECHNICAL CO., LTD.) 14 May 2019 (2019-05-14)<br>  see description paragraphs 4, 295, 345 | 1-30 |
| A | CN 109728840 A (HUAWEI TECHNOLOGIES CO., LTD.) 07 May 2019 (2019-05-07)<br>  entire document | 1-30 |
| A | US 2012224660 A1 (LG Electronics INC.) 06 September 2012 (2012-09-06)<br>  entire document | 1-30 |
| A | US 2019158339 A1 (QUALCOMM INCORPORATED) 23 May 2019 (2019-05-23)<br>  entire document | 1-30 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 December 2020** | **21 December 2020** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/081230**

| Patent document cited in search report | | | Publication date (day/month/year) | Patent family member(s) | | | Publication date (day/month/year) |
|---|---|---|---|---|---|---|---|
| US | 2018324005 | A1 | 08 November 2018 | WO | 2018203706 | A1 | 08 November 2018 |
| | | | | US | 10735225 | B2 | 04 August 2020 |
| | | | | KR | 20180122917 | A | 14 November 2018 |
| CN | 109756440 | A | 14 May 2019 | CN | 111478759 | A | 31 July 2020 |
| | | | | US | 2020267038 | A1 | 20 August 2020 |
| | | | | WO | 2019085729 | A1 | 09 May 2019 |
| | | | | CN | 109756440 | B | 22 May 2020 |
| | | | | CN | 111478758 | A | 31 July 2020 |
| CN | 109728840 | A | 07 May 2019 | WO | 2019085714 | A1 | 09 May 2019 |
| US | 2012224660 | A1 | 06 September 2012 | US | 8625723 | B2 | 07 January 2014 |
| | | | | KR | 20120100739 | A | 12 September 2012 |
| US | 2019158339 | A1 | 23 May 2019 | US | 10749726 | B2 | 18 August 2020 |
| | | | | WO | 2019099957 | A1 | 23 May 2019 |
| | | | | CN | 111357249 | A | 30 June 2020 |

Form PCT/ISA/210 (patent family annex) (January 2015)